# EUROPEAN PATENT APPLICATION

(11) **EP 4 734 625 A1**
(43) Date of publication of application: **29.04.2026**
(21) Application number: 23942737.0
(22) Date of filing: 26.06.2023
(51) Int. Cl.: H04W 72/02

(54) **RESOURCE SELECTION METHOD AND TERMINAL**

(71) Applicant: Beijing Xiaomi Mobile Software Co., Ltd., Beijing 100085 (CN)
(72) Inventor: XIONG, Yi, Beijing 100085 (CN)
(74) Representative: Stöckeler, Ferdinand
(86) International application number: PCT/CN2023/102542
(87) International publication number: WO 2025/000211

(57) **Abstract**

The present disclosure relates to a resource selection method and a terminal. The method comprises: a terminal selecting or reselecting a resource according to whether continuous listen-before-talk (LBT) failures of a sidelink (SL) that are triggered by a first resource block set are cancelled. In this way, available resources can be selected in a timely manner for sending data, thereby improving the accuracy of resource selection or reselection, and thus increasing the success rate of data transmission.

## Description

### TECHNICAL FIELD

The present disclosure relates to the field of communication technology, and specifically to a resource selection method, and a terminal.

### BACKGROUND

Sidelink (SL) communication can use unlicensed spectrum. When a terminal sends SL data on the unlicensed spectrum, it is also necessary to perform listen to talk (LBT). A consistent LBT (C-LBT) failure mechanism also applies to the SL communication on the unlicensed spectrum.

### SUMMARY

The method disclosed in the present disclosure may be used to solve the technical problem of "how to select or reselect a resource when a terminal detects that a resource block set triggers a sidelink (SL) consistent listen-to-talk (C-LBT) failure".

The present disclosure provides a resource selection method, and a terminal.

According to a first aspect of the embodiments of the present disclosure, a resource selection method is provided. The method is performed by a terminal and includes:
selecting or reselecting a resource according to whether an SL C-LBT failure triggered by a first resource block set is cancelled.

According to a second aspect of the embodiments of the present disclosure, a resource selection method is provided, including:
receiving sidelink (SL) data sent by a first terminal using a selected or reselected resource, in which the selected or reselected resource is selected or reselected by the first terminal according to whether an SL C-LBT failure triggered by a first resource block set is cancelled.

According to a third aspect of the embodiments of the present disclosure, a resource selection method is provided, including:
selecting or reselecting, by a first terminal, a resource according to whether an SL C-LBT failure triggered by a first resource block set is cancelled, and sending SL data to a second terminal using the resource selected or reselected; and
receiving, by the second terminal, the SL data.

According to a fourth aspect of the embodiments of the present disclosure, a terminal is provided, including:
a processing module, configured to select or reselect a resource according to whether an SL C-LBT failure triggered by a first resource block set is cancelled.

According to a fifth aspect of the embodiments of the present disclosure, a terminal is provided, including:
a transceiver module, configured to receive sidelink (SL) data sent by a first terminal using a selected or reselected resource, wherein the selected or reselected resource is selected or reselected by the first terminal according to whether an SL C-LBT failure triggered by a first resource block set is cancelled.

According to a sixth aspect of the embodiments of the present disclosure, a terminal is provided, including:
a transceiver, a memory, and one or more processors coupled to the memory;
in which the memory stores computer-executable instructions, and when the one or more processors execute the computer-executable instructions, the terminal is caused to perform the resource selection method described in the first aspect of the embodiments.

According to a seventh aspect of the embodiments of the present disclosure, a terminal is provided, including:
a transceiver, a memory, and one or more processors coupled to the memory;
in which the memory stores computer-executable instructions, and when the one or more processors execute the computer-executable instructions, the terminal is caused to perform the resource selection method described in the second aspect of the embodiments.

According to an eighth aspect of the embodiments of the present disclosure, a communication system is provided, including: a first terminal and a second terminal; wherein the first terminal is configured to perform the resource selection method described in the first aspect of the embodiments, and the second terminal is configured to perform the resource selection method described in the second aspect of the embodiments.

According to a ninth aspect of the embodiments of the present disclosure, a storage medium having instructions stored thereon is provided. When the instructions are executed on a communication device, the communication device is caused to perform the information transmission method according to any of the first aspect, or the second aspect.

### BRIEF DESCRIPTION OF THE DRAWINGS

The above and/or additional aspects and advantages of the present disclosure will become apparent and easily understood from the following description of the embodiments in conjunction with the accompanying drawings, in which:
FIG. 1 is a schematic diagram of a communication system according to an embodiment of the present disclosure;
FIG. 2 is an interactive schematic diagram of a resource selection method according to an embodiment of the present disclosure;
FIG. 3A-FIG. 3F each shows a flowchart of a resource selection method according to an embodiment of the present disclosure;
FIG. 4 is a flowchart of a resource selection method according to an embodiment of the present disclosure;
FIG. 5A is an interactive schematic diagram of a resource selection method according to an embodiment of the present disclosure;
FIG. 5B is an interactive schematic diagram of a resource selection method according to an embodiment of the present disclosure;
FIG. 6A is a block diagram of a terminal according to an embodiment of the present disclosure;
FIG. 6B is a block diagram of a control plane network element according to an embodiment of the present disclosure;
FIG. 7A is a block diagram of a communication device according to an embodiment of the present disclosure; and
FIG. 7B is a block diagram of a Chip according to an embodiment of the present disclosure.

### DETAILED DESCRIPTION

Embodiments of the present disclosure provide a resource selection method, and a terminal.

According to a first aspect of embodiments of the present disclosure, a resource selection method is provided, including:
selecting or reselecting, by a terminal, a resource according to whether an SL C-LBT failure triggered by a first resource block set is cancelled.

In the above embodiment, in a case where the SL C-LBT failure triggered by the first resource block set is not canceled, if the resource in the first resource block set is selected or reselected to send data, the LBT detection before sending the data may fail, resulting in a failure of data transmission. Therefore, according to whether the SL C-LBT failure triggered by the first resource block set is canceled, the resource is selected or reselected, and an available resource can be selected in time to send data, thereby improving an accuracy of resource selection or reselection, and then improving a success rate of data transmission.

In combination with some embodiments of the first aspect, in some embodiments, selecting or reselecting the resource according to whether the SL C-LBT failure triggered by the first resource block set is cancelled includes:
in a case where the SL C-LBT failure triggered by the first resource block set is not cancelled, not selecting or reselecting a resource in the first resource block set when performing a resource selection or reselection.

In the above embodiment, if the SL C-LBT failure triggered by the first resource block set is not canceled, the resource in the first resource block set is not selected when performing the resource selection or reselection, thereby avoiding selection of the resource in the resource block set that triggers the SL C-LBT failure, and improving the accuracy of the resource selection or reselection.

In combination with some embodiments of the first aspect, in some embodiments, selecting or reselecting the resource according to whether the SL C-LBT failure triggered by the first resource block set is cancelled includes:
in a case where the SL C-LBT failure triggered by the first resource block set is not cancelled, not selecting or reselecting a resource in the first resource block set when performing a resource selection or reselection on a first resource pool containing the first resource block set.

In the above embodiment, if the SL C-LBT failure triggered by the first resource block set is not canceled, when performing the resource selection or reselection on the first resource pool containing the first resource block set, the resource in the first resource block set is not selected or reselected, thereby avoiding selection or reselection of the resource in the resource block set that triggers the SL C-LBT failure and whose SL C-LBT failure is not canceled in the first resource pool, and thus improving the accuracy of the resource selection or reselection on the resource pool.

In combination with some embodiments of the first aspect, in some embodiments, selecting or reselecting the resource according to whether the SL C-LBT failure triggered by the first resource block set is cancelled includes:
in a case where a second resource pool contains a part of physical resource blocks (PRBs) of one or more resource block sets, the first resource block set belongs to the one or more resource block sets, and the SL C-LBT failure triggered by the first resource block set is not canceled, not selecting or reselecting a resource in the second resource pool.

In the above embodiment, the resource pool may include partial PRBs of one or more resource block sets. If the SL C-LBT failure triggered by the first resource block set belonging to the one or more resource block sets is not canceled, the resource in the resource pool is not selected or reselected, thereby avoiding selection or reselection of the resource in the resource block set that triggers the SL C-LBT failure and whose SL C-LBT failure is not canceled, and thus improving the accuracy of the resource selection or reselection.

In combination with some embodiments of the first aspect, in some embodiments, selecting or reselecting the resource according to whether the SL C-LBT failure triggered by the first resource block set is cancelled includes:
in a case where a third resource pool contains a part of PRBs of one or more resource block sets, the first resource block set belongs to the one or more resource block sets, and the SL C-LBT failure triggered by the first resource block set is not canceled, not selecting or reselecting a resource in the first resource block set when performing a resource selection or reselection on the third resource pool.

In the above embodiment, the resource pool may include partial PRBs of one or more resource block sets. If the SL C-LBT failure triggered by the first resource block set belonging to the one or more resource block sets is not canceled, the resource in the resource block set is not selected or reselected, thereby avoiding selection or reselection of the resource in the resource block set that triggers the SL C-LBT failure and whose SL C-LBT failure is not canceled, and thus improving the accuracy of the resource selection or reselection.

In combination with some embodiments of the first aspect, in some embodiments, the method further includes: detecting that the first resource block set triggers the SL C-LBT failure, and sending, by a media access control (MAC) layer of the terminal, first notification information to a physical layer of the terminal, in which the first notification information indicates the first resource block set that triggers the SL C-LBT failure.

In the above embodiment, the MAC layer of the terminal detects that the first resource block set triggers the SL C-LBT failure, and then notifies the physical layer of the terminal that the first resource block set triggers the SL C-LBT failure, so that the physical layer of the terminal may not exclude the resource in the first resource block set when determining the candidate resource set, thereby improving the accuracy of the resource selection or reselection.

In combination with some embodiments of the first aspect, in some embodiments, the method further includes: triggering, by a MAC layer of the terminal, a resource selection or resource reselection, and sending, by the MAC layer of the terminal, first notification information to a physical layer of the terminal, in which the first notification information indicates the first resource block set that triggers the SL C-LBT failure.

In the above embodiment, the MAC layer of the terminal triggers the resource selection or resource reselection. The MAC layer of the terminal may send the first notification information separately to the physical layer of the terminal, so that the physical layer of the terminal may exclude the resource in the first resource block set when determining the candidate resource set, thereby improving the accuracy of the resource selection or reselection.

In combination with some embodiments of the first aspect, in some embodiments, the method further includes: triggering, by a MAC layer of the terminal, a resource selection or resource reselection, and sending, by the MAC layer of the terminal, first notification information and a parameter related to the resource selection to a physical layer of the terminal, in which the first notification information indicates the first resource block set that triggers the SL C-LBT failure.

In the above embodiment, when the MAC layer of the terminal determines that the first resource block set triggers the SL C-LBT and the SL C-LBT is not canceled, it may send the information that the first resource block set triggers the SL C-LBT and the SL C-LBT is not canceled together with a parameter related to the resource selection to the physical layer of the terminal when triggering the resource selection or reselection. Therefore, when the physical layer of the terminal determines the candidate resource set, it may exclude the resource in the first resource block set, thereby improving the accuracy of the resource selection or reselection.

In combination with some embodiments of the first aspect, in some embodiments, the first notification information includes any one or more of:
a first identifier of the first resource block set; or
a second identifier of a resource pool to which the first resource block set belongs and a third identifier of the first resource block set in the resource pool to which the first resource block set belongs.

In the above embodiment, the MAC layer of the terminal detects that the first resource block set triggers the SL C-LBT, and notifies the identifier of the first resource block set that triggers the SL C-LBT failure and whose SL C-LBT failure is not canceled, or the identifier of the resource pool to which the first resource block set belongs and the identifier of the first resource block set in the resource pool to which it belongs, so that the physical layer of the terminal can accurately exclude the resource in the first resource block set when determining the candidate resource set, thereby improving the accuracy of the resource selection or reselection.

In combination with some embodiments of the first aspect, in some embodiments, the method further includes: determining that an SL C-LBT failure triggered by a second resource block set is cancelled, and sending, by the MAC layer of the terminal, second notification information to the physical layer of the terminal, in which the second notification information indicates the second resource block set whose triggered SL C-LBT failure is cancelled. For example, the second notification message is used to indicate that the second resource block set that triggers the SL C-LBT failure and whose triggered SL C-LBT failure thereafter is canceled.

In the above embodiment, it is determined that the SL C-LBT failure triggered by the second resource block set is cancelled, and the physical layer of the terminal is notified that the SL C-LBT failure triggered by the second resource block set has been cancelled. Therefore, when the physical layer of the terminal determines the candidate resource set, it is not necessary to exclude the resource in the second resource block set, thereby improving the accuracy of the resource selection or reselection.

In combination with some embodiments of the first aspect, in some embodiments, the method further includes: triggering, by the MAC layer of the terminal, a resource selection or resource reselection, and sending, by the MAC layer of the terminal, second notification information to a physical layer of the terminal, in which the second notification information indicates the second resource block set whose triggered SL C-LBT failure is cancelled.

In the above embodiment, the MAC layer of the terminal triggers the resource selection or resource reselection, and sends the second notification information to the physical layer separately. When the physical layer of the terminal determines the candidate resource set, it is not necessary to exclude the resource in the second resource block set, thereby improving the accuracy of the resource selection or reselection.

In combination with some embodiments of the first aspect, in some embodiments, the method further includes: triggering, by the MAC layer of the terminal, a resource selection or resource reselection, and sending, by the MAC layer of the terminal, second notification information and a parameter related to the resource selection to a physical layer of the terminal, in which the second notification information indicates the second resource block set whose triggered SL C-LBT failure is cancelled.

In the above embodiment, the MAC layer of the terminal triggers the resource selection or resource reselection, and sends the second notification information together with the parameter related to the resource selection to the physical layer of the terminal. When the physical layer of the terminal determines the candidate resource set, it is not necessary to exclude the resource in the second resource block set, thereby improving the accuracy of the resource selection or reselection.

In combination with some embodiments of the first aspect, in some embodiments, the second notification information includes any one or more of:
a fourth identifier of the second resource block set; or
a fifth identifier of a resource pool to which the second resource block set belongs and a sixth identifier of the second resource block set in the resource pool to which the second resource block set belongs.

In the above embodiment, the MAC layer of the terminal detects that the SL C-LBT failure triggered by the second resource block set is canceled, and notifies the identifier of the second resource block set that triggers the SL C-LBT failure and whose triggered SL C-LBT failure has been canceled, or the identifier of the resource pool to which the second resource block set belongs and the identifier of the resource block set in the resource pool to which it belongs, so that when the physical layer of the terminal determines the candidate resource set, it may avoid excluding the resource in the second resource block set, thereby improving the accuracy of the resource selection or reselection.

In combination with some embodiments of the first aspect, in some embodiments, selecting or reselecting the resource according to whether the SL C-LBT failure triggered by the first resource block set is cancelled includes:
detecting that the first resource block set triggers the SL C-LBT failure, and triggering a resource selection or reselection;
determining, by the physical layer of the terminal, a first candidate resource set according to the first resource block set; and
selecting or reselecting, by the MAC layer of the terminal, the resource from the first candidate resource set.

In the above embodiment, the MAC layer of the terminal notifies the physical layer of the terminal of the information of the first resource block set that triggers the SL C-LBT failure. The physical layer of the terminal may determine the first candidate resource set based on the first resource block set, thereby improving the accuracy of the first candidate resource set, and further improving the terminal's MAC resource selection or reselection.

In combination with some embodiments of the first aspect, in some embodiments, determining, by the physical layer of the terminal, the first candidate resource set according to the first resource block set includes:
in a case where the SL C-LBT failure triggered by the first resource block set is not canceled, determining, by the physical layer of the terminal, the first candidate resource set, in which a resource in the first resource block set is not contained in the first candidate resource set.

In the above embodiment, when the physical layer of the terminal determines the first candidate resource set, the resource in the first resource block set is not included in the first candidate resource set, thereby improving the accuracy of the resource selection or reselection and realizing how to not select or reselect the resource in the first resource block set when the C-LBT failure of the SL triggered by the first resource block set is not cancelled.

In combination with some embodiments of the first aspect, in some embodiments, in a case where the SL C-LBT failure triggered by the first resource block set is not canceled, determining, by the physical layer of the terminal, the first candidate resource set, in which a resource in the first resource block set is not contained in the first candidate resource set includes:
in a case where the SL C-LBT failure triggered by the first resource block set is not canceled, performing, by the physical layer of the terminal, the resource selection or reselection on a first resource pool containing the first resource block set and determining the first candidate resource set, in which the resource in the first resource block set is not contained in the first candidate resource set.

In the above embodiment, if the SL C-LBT failure triggered by the first resource block set is not canceled, the physical layer of the terminal does not select or reselect the resource in the first resource block set when performing the resource selection or reselection on the first resource pool containing the first resource block set, thereby avoiding selection or reselection of the resource in the resource block set that triggers the SL C-LBT failure and whose triggered SL C-LBT failure is not canceled in the first resource pool, thereby improving the accuracy of the resource selection or reselection on the resource pool.

In combination with some embodiments of the first aspect, in some embodiments, in a case where the SL C-LBT failure triggered by the first resource block set is not canceled, determining, by the physical layer of the terminal, the first candidate resource set, in which a resource in the first resource block set is not contained in the first candidate resource set includes:
in a case where a second resource pool contains a part of physical resource blocks (PRBs) of one or more resource block sets, the first resource block set belongs to the one or more resource block sets, and the SL C-LBT failure triggered by the first resource block set is not canceled, determining, by the physical layer of the terminal, the first candidate resource set, in which first candidate resource set does not contains a resource in the second resource pool.

In the above embodiment, the resource pool may include partial PRBs of one or more resource block sets. If the SL C-LBT failure triggered by the first resource block set belonging to the one or more resource block sets is not canceled, the physical layer of the terminal does not select or reselect the resource in the resource pool when determining the first candidate resource set, thereby avoiding selection or reselection of the resource in the resource block set that triggers the SL C-LBT failure and whose triggered SL C-LBT failure is not canceled, thereby improving the accuracy of the resource selection or reselection.

In combination with some embodiments of the first aspect, in some embodiments, in a case where the SL C-LBT failure triggered by the first resource block set is not canceled, determining, by the physical layer of the terminal, the first candidate resource set, in which a resource in the first resource block set is not contained in the first candidate resource set includes:
in a case where a third resource pool contains a part of physical resource blocks (PRBs) of one or more resource block sets, the first resource block set belongs to the one or more resource block sets, and the SL C-LBT failure triggered by the first resource block set is not canceled, performing, by the physical layer of the terminal, the resource selection or reselection on the third resource pool, in which the resource in the first resource block set is not contained in the first candidate resource set.

In the above embodiment, the resource pool may include partial PRBs of one or more resource block sets. If the SL C-LBT failure triggered by the first resource block set belonging to the one or more resource block sets is not canceled, the resource in the resource block set is not selected or reselected, thereby avoiding selection or reselection of the resource in the resource block set that triggers the SL C-LBT failure and whose triggered SL C-LBT failure is not canceled, thereby improving the accuracy of the resource selection or reselection.

In combination with some embodiments of the first aspect, in some embodiments, selecting or reselecting the resource according to whether the SL C-LBT failure triggered by the first resource block set is cancelled includes:
detecting that the first resource block set triggers the SL C-LBT failure, and triggering a resource selection or reselection;
determining, by the physical layer of the terminal, a second candidate resource set; and
selecting or reselecting, by the MAC layer of the terminal, the resource from the second candidate resource set.

In the above embodiment, when detecting that the first resource block set triggers the SL C-LBT failure and triggering the resource selection or reselection, the MAC layer of the terminal may select or reselect the resource from the second candidate resource set determined by the physical layer of the terminal based on the first resource block set, thereby improving the accuracy of the terminal's MAC layer resource selection or reselection.

In combination with some embodiments of the first aspect, in some embodiments, selecting or reselecting, by the MAC layer of the terminal, the resource from the second candidate resource set includes:
in a case where the SL C-LBT failure triggered by the first resource block set is not canceled and the second candidate resource set contains a resource in the first resource block set, not selecting or reselecting the resource in the first resource block set when the MAC layer of the terminal selects or reselects the resource from the second candidate resource set.

In the above embodiment, if the SL C-LBT failure triggered by the first resource block set is not canceled and the second candidate resource set includes the resource in the first resource block set, the MAC layer of the terminal may not select or reselect the resource in the first resource block set when selecting or reselecting the resource from the second candidate resource set, thereby improving the accuracy of the resource selection or reselection and realizing how to not select or reselect the resource in the first resource block set when the SL C-LBT failure triggered by the first resource block set is not canceled.

In combination with some embodiments of the first aspect, in some embodiments, the method further includes:
detecting that the first resource block set triggers the SL C-LBT failure, and reselecting a resource pool, in which the resource pool reselected is one or more of:
a resource pool, in which each of one or more resource block sets contained in the resource pool has not triggered the SL C-LBT failure;
a resource pool, in which the resource pool contains one or more resource block sets that have not triggered SL C-LBT failures;
a resource pool, in which the resource pool contains a part of PRBs of one resource block set that has not triggered the SL C-LBT failure; or
a resource pool, in which the resource pool contains a part of PRBs of a plurality of resource block sets, one or more resource block sets of the plurality of resource block sets have not triggered SL C-LBT failures.

In the above embodiment, when the terminal detects that the first resource block set triggers the SL C-LBT failure, some resource pools that meet the condition can be selected when reselecting the resource pool, thereby improving the accuracy of selecting the resource pool and further improving the accuracy of the resource selection or reselection.

In combination with some embodiments of the first aspect, in some embodiments, selecting or reselecting, by the MAC layer of the terminal, the resource from the second candidate resource set includes:
in a case where the SL C-LBT failure triggered by the first resource block set is cancelled, allowing to select or reselect a resource in the first resource block set when performing a resource selection or reselection.

In the above embodiment, if the SL C-LBT failure triggered by the first resource block set is cancelled, the terminal may select or reselect the resource in the first resource block set when performing the resource selection or reselection, thereby improving the accuracy of the resource selection or reselection.

In combination with some embodiments of the first aspect, in some embodiments, the terminal is a first terminal, and the method further includes:
sending SL data to a second terminal using the resource selected or reselected.

In the above embodiment, the first terminal may send the SL data to the second terminal by utilizing the resource selected or reselected based on whether the SL C-LBT failure triggered by the first resource block set is triggered, thereby improving the success rate of data transmission.

According to a second aspect of embodiments of the present disclosure, a resource selection method is provided, including:
receiving SL data sent by a first terminal using a selected or reselected resource, wherein the selected or reselected resource is selected or reselected by the first terminal according to whether an SL C-LBT failure triggered by a first resource block set is cancelled.

In the above embodiment, the second terminal receives the SL data sent by the first terminal using the resource selected or reselected based on whether the SL C-LBT failure triggered by the first resource block set is triggered, thereby improving the success rate of the second terminal receiving the SL data sent by the first terminal.

According to a third aspect of embodiments of the present disclosure, a resource selection method is provided, including:
selecting or reselecting, by a first terminal, a resource according to whether an SL C-LBT failure triggered by a first resource block set is cancelled, and sending SL data to a second terminal using the resource selected or reselected; and
receiving, by the second terminal, the SL data.

In the above embodiment, the first terminal selects or reselects the resource according to whether the SL C-LBT failure triggered by the first resource block set is cancelled, and uses the selected or reselected resource to send the SL data to the second terminal, thereby improving the success rate of data transmission.

According to a fourth aspect of embodiments of the present disclosure, a terminal is provided, including: at least one of a transceiver module or a processing module. The terminal is configured perform the first aspect and alternative implementations of the first aspect.

According to a fifth aspect of embodiments of the present disclosure, a terminal is provided, including: at least one of a transceiver module or a processing module. The terminal is configured perform the second aspect.

According to a sixth aspect of embodiments of the present disclosure, a terminal is provided, including: one or more processors. The terminal is configured to perform the first aspect and alternative implementations of the first aspect.

According to a seventh aspect of the embodiments of the present disclosure, a terminal is provided, including: one or more processors. The terminal is configured to perform the second aspect.

According to an eighth aspect of the embodiments of the present disclosure, a communication system is provided, including a first terminal and a second terminal. The first terminal is configured to perform the method described in the first aspect and alternative implementations of the first aspect, and the second terminal is configured to perform the method described in the second aspect.

According to a ninth aspect of the embodiments of the present disclosure, a storage medium having instructions stored thereon is provided. When the instructions are executed on a communication device, the communication device is caused to perform the method described in the first aspect, alternative implementations of the first aspect, and the second aspect.

According to a tenth aspect of the embodiments of the present disclosure, a program product is provided. When the program product is executed on a communication device, the communication device is caused to perform the method described in the first aspect, alternative implementations of the first aspect and the second aspect.

According to an eleventh aspect of the embodiments of the present disclosure, a computer program is provided. When the computer program is running on a computer, the computer is caused to perform the method described in the first aspect, alternative implementations of the first aspect and the second aspect.

According to a twelfth aspect of the embodiments of the present disclosure, a chip or chip system is provided. The chip or chip system includes a processing circuit configured to execute the method described in the first aspect, alternative implementations of the first aspect and the second aspect.

It can be understood that the above-mentioned terminal, the communication system, the storage medium, the program product, the computer program, and the chip or chip system are all used to execute the method proposed in the embodiments of the present disclosure. Therefore, for the beneficial effects that can be achieved, reference may be made to the beneficial effects in the corresponding method, which will not be repeated here.

The embodiments of the present disclosure propose a resource selection method, and a terminal. In some embodiments, the terms such as resource selection method, communication method, etc. can be replaced with each other, the terms such as information transmission apparatus, information processing apparatus, communication apparatus, etc. can be replaced with each other, and the terms such as information processing system, communication system etc. can be replaced with each other.

The embodiments of the present disclosure are not exhaustive, but are only illustrative, and are not intended to be a specific limitation on the protection scope of the present disclosure. In the absence of contradiction, each step in a certain embodiment can be implemented as an independent embodiment, and respective steps can be arbitrarily combined. For example, a solution after removing some steps in a certain embodiment can also be implemented as an independent embodiment, and the order of the steps in a certain embodiment can be arbitrarily exchanged. In addition, the optional implementations in a certain embodiment can be arbitrarily combined; in addition, respective embodiments can be arbitrarily combined, for example, some or all steps of different embodiments can be arbitrarily combined, and a certain embodiment can be arbitrarily combined with the optional implementations of other embodiments.

In each embodiment of the present disclosure, unless otherwise specified or there is a logical conflict, the terms and/or descriptions between the embodiments are consistent and can refer to each other, and the technical features in different embodiments can be combined to form a new embodiment based on their internal logical relationships.

The terms used in the embodiments of the present disclosure are only for the purpose of describing specific embodiments and are not intended to limit the present disclosure.

In the embodiments of the present disclosure, unless otherwise specified, elements expressed in the singular form, such as "a", "an", "the", "above", "said", "aforementioned", "this", etc., may mean "one and only one", or "one or more", "at least one", etc. For example, when using articles such as "a", "an", "the" in English translation, the noun after the article may be understood as a singular expression or a plural expression.

In the embodiments of the present disclosure, "plurality" refers to two or more.

In some embodiments, the terms "at least one of", "one or more", "a plurality of", "multiple" etc. may be used interchangeably.

In some embodiments, descriptions such as "at least one of A, B... ", "A and/or B...", "in one case, A; in another case, B", "in response to one case, A; in response to another case, B", etc. may include the following technical solutions according to situations: in some embodiments, A (A is executed independently of B); in some embodiments, B (B is executed independently of A); in some embodiments, one is selected from A and B to be executed (A and B are selectively executed); in some embodiments, A and B (both A and B are executed). When there are more branches such as A, B, C, etc., the above is applicable.

In some embodiments, descriptions such as "A or B... ", etc. may include the following technical solutions according to situations: in some embodiments, A (A is executed independently of B); in some embodiments, B (B is executed independently of A); in some embodiments, one is selected from A and B to be executed (A and B are selectively executed). When there are more branches such as A, B, C, etc., the above is applicable.

The prefixes such as "first" and "second" in the embodiments of the present disclosure are only used to distinguish different descriptive objects, and do not constitute restrictions on the position, order, priority, quantity or content of the descriptive objects. For the statement of the descriptive objects, reference may be made to the description in the context of the claims or embodiments, and it should not constitute redundant restrictions due to the use of prefixes. For example, if the descriptive object is "field", the ordinal number before the "field" in the "first field" and the "second field" does not limit the position or order between the "fields", and the terms "first" and "second" do not limit whether the "fields" they modify are in the same message, nor do they limit the order of the "first field" and the "second field". For another example, if the descriptive object is "level", the ordinal number before the "level" in the "first level" and the "second level" does not limit the priority between the "levels". For another example, the number of descriptive objects is not limited by the ordinal number, and can be one or more. Taking the "first apparatus" as an example, the number of "apparatuses" can be one or more. In addition, the objects modified by different prefixes may be the same or different. For example, if the descriptive object is "apparatus", then the "first apparatus" and the "second apparatus" may be the same device or different apparatuses, and their types may be the same or different. For another example, if the descriptive object is "information", then the "first information" and the "second information" may be the same information or different information, and their contents may be the same or different.

In some embodiments, "including A", "comprising A", "used to indicate A", and "carrying A" can be interpreted as directly carrying A or indirectly indicating A.

In some embodiments, the terms such as "in response to...", "in response to determining...", "in the case of...", "at the time of...", "when...", "if...", "provide that...", etc. can be used interchangeably.

In some embodiments, the apparatus, etc. can be interpreted as physical or virtual, and their names are not limited to the names recorded in the embodiments. The terms such as "apparatus", "equipment", "device", "circuit", "network element", "node", "function", "unit", "section", "system", "network", "chip", "chip system", "entity", and "subject" can be used interchangeably.

In some embodiments, the terms such as "access network device (AN device)", "radio access network device (RAN device)", "base station (BS)", "radio base station", "fixed station", "node", "access point", "transmission point (TP)", "reception point (RP)", "transmission/reception point (TRP)", "panel", "antenna panel", "antenna array", "cell", "macro cell", "small cell", "femto cell", "pico cell", "sector", "cell group", "carrier", "component carrier", "bandwidth part (BWP)" and the like can be used interchangeably.

In some embodiments, the terms such as "terminal", "terminal device", "user equipment (UE)", "user terminal", "mobile station (MS)", "mobile terminal (MT)", "subscriber station", "mobile unit", "subscriber unit", "wireless unit", "remote unit", "mobile device", "wireless device", "wireless communication device", "remote device", "mobile subscriber station", "access terminal", "mobile terminal", "wireless terminal", "remote terminal", "handset", "user agent", "mobile client", "client" and the like can be used interchangeably.

In some embodiments, the access network device, the core network device, or the network device can be replaced by the terminal. For example, various embodiments of the present disclosure can also be applied to a structure in which the communication between the access network device, the core network device, or the network device and the terminal is replaced by the communication between multiple terminals (for example, it can also be referred to as device-to-device (D2D), vehicle-to-everything (V2X), etc.). In this case, the terminal can be set to have a structure that has all or part of functions of the access network device. In addition, the terms such as "uplink" and "downlink" can also be replaced by the terms corresponding to the communication between the terminals (for example, "side"). For example, the uplink channel, the downlink channel, etc. can be replaced by the side channel, and the uplink, the downlink, etc. can be replaced by the side link.

In some embodiments, the terminal may be replaced by the access network device, the core network device, or the network device. In this case, the access network device, the core network device, or the network device may also be configured to have a structure that has all or part of functions of the terminal.

In some embodiments, the acquisition of data, information, etc. may comply with the laws and regulations of the country where the data is obtained.

In some embodiments, data, information, etc. may be obtained with the user's consent.

FIG**.** 1 is a schematic diagram of a communication system according to an embodiment of the present disclosure.

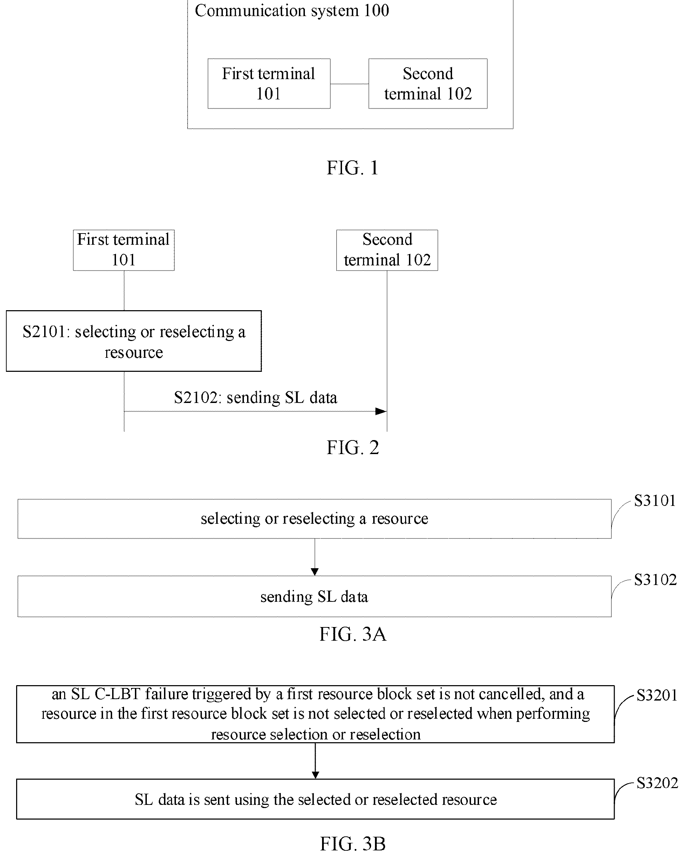

As shown in FIG. 1, the communication system 100 may include a terminal 101 and a second terminal 102. A communication connection may be established between the first terminal 101 and the second terminal 102. SL communication may be performed between the first terminal 101 and the second terminal 102.

In some embodiments, the communication system 100 may further include a network device, and the network device may include at least one of an access network device or a core network device.

In some embodiments, the first terminal 101 or the second terminal 102, for example, may include at least one of a mobile phone, a wearable device, an Internet of Things device, a car with a communication function, a smart car, a Pad, a computer with a wireless receiving and sending function, a virtual reality (VR) terminal, an augmented reality (AR) terminal, a wireless terminal in industrial control, a wireless terminal in self-driving, a wireless terminal in remote medical surgery, a wireless terminal in smart grid, a wireless terminal in transportation safety, a wireless terminal in smart city, or a wireless terminal in smart home, but is not limited thereto.

In some embodiments, the access network device may be, for example, a node or device that accesses a terminal to a wireless network. The access network device may include at least one of an evolved NodeB (eNB) in a 5G communication system, a next generation eNB (ng-eNB), a next generation NodeB (gNB), a node B (NB), a home node B (HNB), a home evolved nodeB (HeNB), a wireless backhaul device, a radio network controller (RNC), a base station controller (BSC), a base transceiver station (BTS), a base band unit (BBU), a mobile switching center, a base station in a 6G communication system, an open base station (Open RAN), a cloud base station (Cloud RAN), a base station in other communication systems, or an access node in a wireless fidelity (WiFi) system, but is not limited thereto.

In some embodiments, the technical solution of the present disclosure may be applicable to an Open RAN architecture. In this case, the interfaces between or within the access network devices involved in the embodiments of the present disclosure may become internal interfaces of the Open RAN, and the processes and information interactions between these internal interfaces may be implemented through software or programs.

In some embodiments, the access network device may include a central unit (CU) and a distributed unit (DU), in which the CU may also be called a control unit. A protocol layer of the access network device may be divided by adopting the CU-DU structure. Some functions of the protocol layer are centrally controlled by the CU, and some or all of remaining functions of the protocol layer are distributed in the DU which is centrally controlled by the CU, but is not limited thereto.

In some embodiments, the core network device may be a device including one or more network elements, or may be a plurality of devices or a group of devices including all or some of one or more network elements. The network element may be virtual or physical. The network element may be virtual or physical. The core network may include, for example, at least one of an Evolved Packet Core (EPC), a 5G Core Network (5GCN), or a Next Generation Core (NGC).

It can be understood that the communication system described in the embodiments of the present disclosure aims to more clearly illustrate the technical solution of the embodiments of the present disclosure, and does not constitute a limitation on the technical solution proposed in the embodiments of the present disclosure. A person skilled in the art can know that with the evolution of the system architecture and the emergence of new business scenarios, the technical solution proposed in the embodiments of the present disclosure are also applicable to similar technical problems.

The following embodiments of the present disclosure may be applied to the communication system 100 or part of the entities shown in FIG. 1a, but are not limited thereto. The entities shown in FIG. 1a are examples, and the communication system may include all or part of the entities in FIG. 1, or may include other entities other than those shown in FIG. 1a, and the number and form of the entities are arbitrary, and the connection relationships between the entities are examples, and the entities may be connected or disconnected, and the connection may be in any manner, which may be a direct connection or an indirect connection, and may be a wired connection or a wireless connection.

The embodiments of the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 5G new radio (NR), future radio access (FRA), new radio access technology (RAT), new radio (NR), new radio access (NX), future generation radio access (FX), Global System for Mobile communications (GSM (registered trademark)), CDMA2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), Public Land Mobile Network (PLMN) network, Device-to-Device (D2D) system, Machine-to-Machine (M2M) system, Internet of Things (IoT) system, Vehicle-to-Everything (V2X), systems using other communication methods, and next-generation systems based on them. In addition, multiple systems can also be combined (for example, a combination of LTE or LTE-A and 5G, etc.) for application.

In order to support direct communication between terminals, an SL communication mode is introduced. Optionally, an interface between the terminals may be PC-5 (direct communication interface).

Optionally, according to a corresponding relationship between a transmitting terminal and a receiving terminal, three transmission modes are supported on the SL: unicast, multicast and broadcast. For example, the transmitting terminal sends SL control information (SCI) on a physical sidelink control channel (PSCCH) and sends the second stage SCI on a physical sidelink shared channel (PSSCH) channel, for example carrying a resource location of transmission data, a source identifier and a target identifier. For example, for a data packet enabled with hybrid automatic repeat request (HARQ) feedback, the receiving terminal performs hybrid automatic repeat request-acknowledgement (HARQ-ACK) feedback for the PSSCH on a physical sidelink feedback channel (PSFCH).

Optionally, the SL communication has two transmission resource allocation modes, one is a network dynamic scheduling mode (for example, it can be called a network scheduling mode), and the other is a mode that terminal performs autonomous selection in a network configured or pre-configured resource pool (for example, it can be called an autonomous selection mode). The network scheduling mode refers to that the network device dynamically allocates the transmission resource on the SL to the terminal according to cache data reported by the terminal, and the autonomous selection mode refers to that the terminal autonomously and randomly selects the transmission resource from the network configured or pre-configured resource pool. Optionally, the network device may configure multiple resource pools for the terminal on one BWP. Optionally, which resource allocation mode the terminal uses may be configured by the network device via radio resource control (RRC) signaling.

In some embodiments, the name of the network scheduling mode is not limited. For example, the network scheduling mode may be type 1 or mode 1.

In some embodiments, the name of the autonomous selection mode is not limited. For example, the autonomous selection mode may be type 2 or mode 2.

Optionally, uplink and downlink operations may be performed in unlicensed bands, in which channel access for both downlink and uplink relies on the LBT feature. A wireless device or a base station first "senses" a communication channel and detects that there is no communication before any transmission. When one communication channel is an unlicensed wideband carrier (e.g., hundreds of megahertz), the LBT procedure relies on detecting energy levels on multiple subbands of the communication channel. Optionally, LBT parameters (such as type/duration, clear channel assessment parameters, etc.) can be configured to the wireless device by the base station.

In some embodiments, terms such as "uplink", "uplink", "physical uplink", etc. may be used interchangeably, and terms such as "downlink", "downlink", "physical downlink", etc. may be used interchangeably.

Optionally, the terminal may count the number of uplink LBT failures on each BWP. Optionally, the network device configures the maximum number of C-LBT failures (lbt-FailureInstanceMaxCount) and a timer for detecting C-LBT failures (lbt-FailureDetectionTimer) for the terminal per serving cell via RRC signaling (for example, lbt-FailureRecoveryConfig) to count the C-LBT failures. The UE maintains an LBT_counter variable for each cell, and an initial value of the variable is 0. For each activated cell configured with lbt-FailureRecoveryConfig, when the terminal receives an LBT failure indication submitted by a physical layer, it starts or restarts the lbt-FailureDetectionTimer, and the LBT_counter is increased by 1. When the LBT_counter is greater than or equal to the lbt-FailureInstanceMaxCount, the activated BWP on the cell triggers the C-LBT failure.

The SL communication can use unlicensed spectrum, and the terminal needs to perform the LBT when sending SL data on the unlicensed spectrum. A C-LBT failure mechanism also applies to the SL communication on the unlicensed spectrum.

In some embodiments, the terms "side", "sidelink", "side communication", "sidelink communication", "direct connection", "direct link", "direct communication", "direct link communication" and the like can be used interchangeably.

Optionally, a granularity of the SL C-LBT failure may be a granularity of resource block set, that is, the terminal counts whether the number of LBT failure indications on one resource block set reaches a preset number within a time period, and determines whether the SL C-LBT failure is triggered on the resource block set.

Optionally, the terminal detects that a resource block set triggers the SL C-LBT failure, and the terminal may reselect a resource block set or a resource pool, and the reselected resource block set or resource pool does not trigger the SL C-LBT failure.

Optionally, the resource selection of the terminal whose resource allocation mode is the autonomous selection mode is based on a granularity of resource pool. The terminal selects or reselects the resource pool, and then selects or reselects a resource in the resource pool.

Optionally, when triggering resource selection or reselection, an MAC layer of the terminal needs to provide a set of parameters to the physical layer PHY, which may include a remaining packet delay budget (PDB) and other related parameters that the physical layer needs to use when performing the resource selection or reselection. Optionally, the resource selection or reselection refers to that the physical layer of the terminal determines and provides one candidate resource set to the MAC layer of the terminal based on the set of parameters provided by the MAC layer of the terminal, and the MAC layer of the terminal then selects or reselects the corresponding resource from the candidate resource set based on the number of retransmissions, the remaining PDB of data to be transmitted, etc.

However, a detailed method of how the terminal selects or reselects the resource has not yet been clarified.

Accordingly, the present disclosure proposes a resource selection or reselection method.

Optionally, in some embodiments, the method of the present disclosure may be applied to a sidelink-unlicense (SL-U) scenario. For example, in some embodiments, the method of the present disclosure may be applied to a Vehicle to Everything (V2X) scenario.

FIG. 2 is an interactive schematic diagram of a resource selection method according to an embodiment of the present disclosure. As shown in FIG. 2, an embodiment of the present disclosure relates to a resource selection method applied in the communication system 100, and the method includes the following steps.

At step S2101, the terminal 101 selects or reselects a resource.

In some embodiments, terms such as "certain", "predetermined", "preset", "set", "indicated", "some", "any", "either", "first", etc. can be interchangeable, and "specific A", "predetermined A", "preset A", "set A", "indicated A", "certain A", "any A", "either A", "first A" can be interpreted as A pre-defined in a protocol, etc., or as A obtained through setting, configuration, or indication, etc., and can also be interpreted as specific A, certain A, any A, either A or first A, etc., which is not limited herein.

In some embodiments, the first terminal 101 may be a terminal whose resource allocation mode is the autonomous resource selection mode (mode2).

In some embodiments, the first terminal 101 may be a terminal in an RRC connected state.

In some embodiments, the first terminal 101 may be a terminal in an RRC idle state.

In some embodiments, the first terminal 101 may be a terminal in an RRC dormant state.

In some embodiments, the first terminal 101 may be a terminal out of coverage (OOC).

In some embodiments, the first terminal 101 may select or reselect the resource upon detecting that a first resource block set triggers an SL C-LBT failure.

In some embodiments, the first resource block set may be one or more, that is, one resource block set may trigger the SL C-LBT failure, or multiple resource block sets may trigger the SL C-LBT failures respectively, which is no limitation herein.

In some embodiments, in a case where the first terminal 101 detects that the first resource block set triggers the SL C-LBT failure, it may first reselect a resource pool and then select or reselect the resource in the reselected resource pool, or the first terminal 101 may not reselect a resource pool but select or reselect the resource in a current resource pool.

In some embodiments, one resource pool may include one or more resource block sets. For example, one resource pool includes one resource block set, which may mean that one resource pool includes resources in the whole resource block set.

In some embodiments, one resource pool may include some PRBs of one or more resource block sets. For example, some PRBs of one resource block set may be understood as some resources of the resource block set. For example, one resource pool includes some PRBs of one resource block set, which may refer to that the resource pool belongs to some PRBs of one resource block set. For example, one resource pool includes some PRBs of multiple resource block sets, which may refer to that the resource pool belongs to some PRBs of multiple resource block sets.

For example, resource pool A includes some resources B11 in resource block set B1 and some resources B21 in resource block set B2.

In some embodiments, if the first terminal 101 detects that the first resource block set triggers the SL C-LBT failure, the first terminal 101 may reselect a resource pool, in which the reselected resource pool may be one or more of:
a resource pool, each of one or more resource block sets contained in the resource pool has not triggered the SL C-LBT failure;
a resource pool containing one or more resource block sets that have not triggered SL C-LBT failures;
a resource pool containing some PRBs of one resource block set that has not triggered the SL C-LBT failure; or
a resource pool containing some PRBs including multiple resource block sets, in which one or more resource block sets of the multiple resource block sets have not triggered SL C-LBT failures.

In some embodiments, the first terminal 101 may select or reselect the resource based on whether the SL C-LBT failure triggered by the first resource block set is cancelled.

In some embodiments, if the SL C-LBT failure triggered by the first resource block set is not cancelled, the first terminal 101 does not select or reselect a resource in the first resource block set when performing the resource selection or reselection.

In some embodiments, a case that the SL C-LBT failure triggered by the first resource block set is not cancelled may refer to before the SL C-LBT failure triggered by the first resource block set is cancelled.

In some embodiments, if the SL C-LBT failure triggered by the first resource block set is not canceled, the first terminal 101 does not select or reselect a resource in the first resource block set when performing the resource selection or reselection on a first resource pool containing the first resource block set.

For example, the first resource pool may include one or more resource block sets, and the first resource block set belongs to the one or more resource block sets. The first terminal 101 detects that the first resource block set in the first resource pool triggers the SL C-LBT failure. Before the SL C-LBT failure of the first resource block set is cancelled, the first terminal 101 does not select or reselect the resource in the first resource block set when performing the resource selection or reselection on the first resource pool.

In some embodiments, in a case where a second resource pool may include partial PRBs of one or more resource block sets, the first resource block set belongs to the one or more resource block sets, and the SL C-LBT failure triggered by the first resource block set is not canceled, a resource in the second resource pool is not selected or reselected.

For example, the second resource pool includes some PRBs of the first resource block set, and the first terminal 101 detects that the first resource block set triggers the SL C-LBT failure. Before the SL C-LBT failure of the first resource block set is canceled, the first terminal 101 does not select or reselect the resource in the second resource pool.

For example, the second resource pool includes some PRBs of multiple resource block sets, and the first resource block set belongs to the multiple resource block sets. The first terminal 101 detects that the first resource block set triggers the SL C-LBT failure, and before the SL C-LBT failure triggered by the first resource block set is cancelled, the first terminal 101 does not select or reselect the resource in the second resource pool.

For example, resource pool A includes some resources B11 in resource block set B1 and some resources B21 in resource block set B2. If resource block set B1 triggers the SL C-LBT failure, the resource in resource pool A will not be selected or reselected before the SL C-LBT failure triggered by resource block set B1 is canceled.

For example, the second resource pool includes some PRBs of multiple resource block sets, and the first terminal 101 detects that the multiple resource block sets all trigger SL C-LBT failures. Before the SL C-LBT failures triggered by the multiple resource block sets are canceled, the first terminal 101 does not select or reselect the resource in the resource pool.

In some embodiments, in a case where a third resource pool may include partial PRBs of one or more resource block sets, the first resource block set belongs to the one or more resource block sets, and the SL C-LBT failure triggered by the first resource block set is not canceled, a resource in the first resource block set is not selected or reselected when performing the resource selection or reselection on the third resource pool.

For example, the third resource pool includes some PRBs of the first resource block set, and before the SL C-LBT failure triggered by the first resource block set is canceled, the resource in the first resource block set is not selected or reselected when performing the resource selection or reselection on the third resource pool.

For example, the third resource pool includes some PRBs of multiple resource block sets, and the first resource block set belongs to the multiple resource block sets. The first terminal 101 detects that the first resource block set triggers the SL C-LBT failure, and before the SL C-LBT failure triggered by the first resource block set is cancelled, the first terminal 101 does not select or reselect the resource in the first resource block set when performing the resource selection or reselection on the third resource pool.

For example, resource pool A includes some resources B11 in resource block set B1 and some resources B21 in resource block set B2. If resource block set B1 triggers the SL C-LBT failure, before the SL C-LBT failure triggered by resource block set B1 is canceled, the resource in resource block set B1 will not be selected or reselected when performing the resource selection or reselection on resource pool A.

In some embodiments, it is detected that the first resource block set triggers the SL C-LBT failure, a MAC layer of the first terminal 101 delivers first notification information to a physical layer of the terminal, in which the first notification information may be used to indicate the first resource block set that triggers the SL C-LBT failure. In some embodiments, the terms "send", "deliver" and the like can be interchangeable.

In some embodiments, the MAC layer of the first terminal 101 detects that the first resource block set triggers the SL C-LBT failure, and the MAC layer of the first terminal 101 delivers the first notification information to the physical layer of the terminal, in which the first notification information may be used to indicate the first resource block set that triggers the SL C-LBT failure.

In a possible implementation, when the MAC layer of the first terminal 101 detects that the first resource block set triggers the SL C-LBT failure, it notifies the physical layer of the first terminal 101 that the first resource block set triggers the SL C-LBT failure. In some embodiments, the first notification information includes any one or more of: a first identifier of the first resource block set; or a second identifier of a resource pool to which the first resource block set belongs and a third identifier of the first resource block set in the resource pool to which it belongs.

For example, the first resource block set has a unique identifier on the BWP, and the first identifier may be the unique identifier of the first resource block set on the BWP.

For example, the first resource block set has a unique identifier in the resource pool to which it belongs, and the third identifier may be the unique identifier of the first resource block set in the resource pool to which it belongs.

In some embodiments, the first notification information may be implemented through some terminal internal signaling. For example, the MAC layer of the first terminal 101 may deliver the first notification information to the physical layer of the first terminal through an internal source language. For example, the internal source language may be implemented by the first terminal 101. The first notification information notifies information of the resource block set that triggers the SL C-LBT failure. The first notification information may indicate one resource block set or multiple resource block sets.

In some embodiments, it is determined that the SL C-LBT failure triggered by a second resource block set is cancelled, and the MAC layer of the first terminal 101 delivers second notification information to the physical layer of the terminal, in which the second notification information may be used to indicate the second resource block set whose triggered SL C-LBT failure is cancelled. For example, the second notification information may be used to indicate the second resource block set that triggers the SL C-LBT failure and whose triggered SL C-LBT failure is cancelled (i.e., the second resource block set triggers the SL C-LBT failure and then the triggered SL C-LBT failure is cancelled).

In some embodiments, when the MAC layer of the first terminal 101 determines that the SL C-LBT failure triggered by the second resource block set is canceled, the MAC layer of the first terminal 101 may deliver the second notification information to the physical layer of the terminal, in which the second notification information may be used to indicate the second resource block set whose triggered SL C-LBT failure is canceled.

In some embodiments, the second resource block set may be one or more, that is, the resource block set whose triggered SL C-LBT failure is cancelled may be one or more, which is not limited herein.

In one possible implementation, when the MAC layer of the first terminal 101 determines that the SL C-LBT failure triggered by the second resource block set is cancelled, it notifies the physical layer of the first terminal 101 that the SL C-LBT failure triggered by the second resource block set is cancelled.

In some embodiments, the second notification information includes any one or more of: a fourth identifier of the second resource block set; or a fifth identifier of a resource pool to which the second resource block set belongs and a sixth identifier of the second resource block set in the resource pool to which it belongs.

For example, the second resource block set has a unique identifier on the BWP, and the fourth identifier may be the unique identifier of the second resource block set on the BWP.

For example, the second resource block set has a unique identifier in the resource pool to which it belongs, and the sixth identifier may be the unique identifier of the second resource block set in the resource pool to which it belongs.

For example, when the first terminal 101 in the RRC connected state detects that the second resource block set triggers the SL C-LBT failure, it can report to the network device through an SL C-LBT failure MAC CE, and the SL C-LBT failure MAC CE indicates the second resource block set that triggers the SL C-LBT failure and whose triggered SL C-LBT failure has not been cancelled. For example, the first terminal 101 in the RRC connected state may cancel the SL C-LBT failure of the second resource block set when the SL C-LBT failure MAC CE is sent successfully. For example, the first terminal 101 in the RRC connected state cancels the SL C-LBT failure of the second resource block set when the SL C-LBT failure MAC CE is sent successfully, but the MAC layer of the first terminal 101 does not immediately deliver the second notification information to the physical layer of the terminal to notify the physical layer of the first terminal 101 that the SL C-LBT failure triggered by the second resource block set is cancelled. This is because the resource in the second resource block set has not been restored at this time. Therefore, if the physical layer is notified immediately, it may cause the physical layer to fail to exclude the resource in the second resource block set when determining a candidate resource set. Therefore, when the SL C-LBT failure MAC CE is sent successfully, the first terminal 101 may wait for an instruction of the network device to be received before delivering the second notification information to the physical layer of the terminal. For example, the instruction of the network device may be a resource reconfiguration instruction or another configuration instruction, which is not specifically limited in the present disclosure. For example, when the SL C-LBT failure MAC CE is sent successfully, the first terminal 101 may start a timer and wait until the timer expires before delivering the second notification information to the physical layer of the terminal. A timer length may be obtained through network configuration or pre-configuration. For example, the first terminal 101 in the RRC connected state may obtain the timer configuration through dedicated signaling, the first terminal 101 in the RRC IDLE/INACTIVE state may obtain the timer configuration through SIB (system message), and the first terminal 101 in the OOC state may obtain the timer configuration through pre-configuration. For example, the timer length may be determined by the first terminal 101 through implementation.

In some embodiments, the MAC layer of the first terminal 101 delivers the first notification information and/or the second notification information together with a parameter related to the resource selection to the physical layer of the first terminal 101, in which the first notification information may be used to indicate the first resource block set that triggers the SL C-LBT failure, and the second notification information may be used to indicate the second resource block set whose triggered SL C-LBT failure is canceled.

For example, the parameter related to the resource selection may be a related parameter that the physical layer of the first terminal 101 needs to use when performing the resource selection.

For example, the MAC layer of the first terminal 101 triggers the resource selection or reselection. When performing the resource selection or reselection, the MAC layer of the first terminal 101 delivers the first notification information and/or the second notification information together with the parameter related to the resource selection to the physical layer of the first terminal 101. For example, the MAC layer of the first terminal 101 may trigger the resource selection or reselection upon detecting that the first resource block set triggers the SL C-LBT failure, or may also trigger the resource selection or reselection under other conditions, for example there is no sufficient available resource or the available resource cannot meet a PDB requirement of data to be transmitted, etc., which is not specifically limited in the present disclosure.

In some embodiments, when triggering the resource selection or reselection, the MAC layer of the first terminal 101 sends the first notification information together with the parameter related to the resource selection to the physical layer of the terminal, in which the first notification information may be used to indicate the first resource block set that triggers the SL C-LBT failure. For example, the first notification information may be delivered to the physical layer of the terminal as part of the parameter related to the resource selection. The parameter related to the resource selection includes but is not limited to one or more of:
a remaining PDB;
the number of subchannels used for PSSCH transmission in one subframe L_"subCH";
a resource reservation interval for PSSCH transmission P_"rsvp_TX"; or
a PSSCH transmission priority prio_TX.

In some embodiments, when the MAC layer of the first terminal 101 triggers the resource selection or reselection, the MAC layer of the first terminal 101 sends the first notification information together with the parameter related to the resource selection to the physical layer of the terminal.

In some embodiments, when triggering the resource selection or reselection, the MAC layer of the first terminal 101 sends the first notification information to the physical layer of the terminal, in which the first notification information may be used to indicate the first resource block set that triggers the SL C-LBT failure. For example, the first notification information may not be used as the parameter related to the resource selection, but may be delivered to the physical layer of the terminal separately.

In some embodiments, when the MAC layer of the first terminal 101 triggers the resource selection or reselection, the MAC layer of the first terminal 101 sends the first notification information to the physical layer of the terminal. In some embodiments, when the resource selection or reselection is triggered, the MAC layer of the first terminal 101 sends the second notification information together with the parameter related to the resource selection to the physical layer of the terminal, in which the second notification information may be used to indicate the second resource block set whose triggered SL C-LBT failure has been cancelled. For example, the second notification information may be delivered to the physical layer of the terminal as part of the parameter related to the resource selection. The parameter related to the resource selection includes but is not limited to one or more of:
a remaining PDB;
the number of subchannels used for PSSCH transmission in one subframe L_"subCH";
a resource reservation interval for PSSCH transmission P_"rsvp_TX"; or
a PSSCH transmission priority prio_TX.

In some embodiments, when the MAC layer of the first terminal 101 triggers the resource selection or reselection, the MAC layer of the first terminal 101 sends the second notification information together with the parameter related to the resource selection to the physical layer of the terminal.

In some embodiments, when triggering the resource selection or reselection, the MAC layer of the first terminal 101 sends the second notification information to the physical layer of the terminal, in which the second notification information may be used to indicate the second resource block set whose triggered SL C-LBT failure is cancelled. For example, the second notification information may not be used as the parameter related to the resource selection, but may be delivered to the physical layer of the terminal separately.

In some embodiments, when the MAC layer of the first terminal 101 triggers the resource selection or reselection, the MAC layer of the first terminal 101 sends the second notification information to the physical layer of the terminal.

In some embodiments, when performing the resource selection or reselection, the MAC layer of the first terminal 101 delivers information of the resource block set that triggers the SL C-LBT failure to the physical layer of the first terminal 101. If the SL C-LBT failure triggered by the resource block set is canceled, the first notification information may be used to determine the resource block set whose triggered SL C-LBT failure is canceled.

For example, the first notification information delivered by the MAC layer of the first terminal 101 each time includes information of the resource block set that triggers the SL C-LBT failure and whose triggered SL C-LBT failure has not been cancelled at the current moment (delivering moment). For example, at time T1, it is detected that resource block set 1 triggers the SL C-LBT failure, the resource selection or reselection is triggered, and the first notification information indicating resource block set 1 is delivered to the physical layer. At time T2, it is detected that resource block set 2 triggers the SL C-LBT failure, the resource selection or reselection is triggered. At this time, the SL C-LBT failure triggered by resource block set 1 has not been cancelled, and the delivered first notification information indicates resource block set 1 and resource block set 2. At time T6, resource block set n triggers the SL C-LBT failure, the resource selection or reselection is triggered. At this time, the SL C-LBT failure triggered by resource block set 1 has been cancelled, and the SL C-LBT failure triggered by resource block set 2 has not been cancelled. The delivered first notification information indicates resource block set 2 and resource block set n, which indicates that the SL C-LBT failure triggered by resource block set 1 has been cancelled. Therefore, the MAC layer delivers the first notification information to the physical layer, and the physical layer may infer the information of the resource block set whose triggered SL C-LBT failure is cancelled through the first notification information.

In some embodiments, when performing the resource selection or reselection, the MAC layer of the first terminal 101 may deliver the first notification information indicating the resource block set that triggers the SL C-LBT failure and the second notification information indicating the resource block set whose triggered SL C-LBT failure is cancelled to the physical layer of the first terminal 101. The resource block set indicated by the first notification information may be the newly added resource block set that triggers the SL C-LBT failure compared to the first notification information delivered previously, and the resource block set indicated by the second notification information is the resource block set whose triggered SL C-LBT failure is cancelled.

For example, at time T1, it is detected that resource block set 1 triggers the SL C-LBT failure, the resource selection or reselection is triggered, and the first notification information indicating resource block set 1 is delivered to the physical layer. At time T2, it is detected that resource block set 2 triggers the SL C-LBT failure, the resource selection or reselection is triggered. At this time, the SL C-LBT failure triggered by resource block set 1 has not been canceled, and the delivered first notification information indicates resource block set 2, and the second notification information is not delivered since there is no resource block set whose SL C-LBT failure is canceled. At time T6, resource block set n triggers the SL C-LBT failure, the resource selection or reselection is triggered, at this time, the SL C-LBT failure triggered by resource block set 1 has been canceled, and the SL C-LBT failure triggered by resource block set 2 has not been canceled. The delivered first notification information indicates resource block set n, and the delivered second notification information indicates resource block set 1, indicating that the SL C-LBT failure triggered by resource block set 1 has been canceled. Therefore, the MAC layer delivers the first notification information and/or the second notification information to the physical layer, and the physical layer directly determines the information of the resource block set that triggers the SL C-LBT failure through the first notification information, and directly determines the information of the resource block set whose triggered SL C-LBT failure is canceled through the second notification information.

In some embodiments, when performing the resource selection or reselection, the MAC layer of the first terminal 101 may deliver the first notification information indicating the resource block set that triggers the SL C-LBT failure and the second notification information indicating the resource block set whose triggered SL C-LBT failure is canceled to the physical layer of the first terminal 101. For example, the first notification information delivered by the MAC layer of the first terminal 101 includes information of the resource block set that triggers the SL C-LBT failure and whose triggered SL C-LBT failure is not canceled at the current moment (delivering moment). The resource block set indicated by the second notification information is a resource block set whose triggered SL C-LBT failure is canceled.

For example, at time T1, it is detected that resource block set 1 triggers the SL C-LBT failure, the resource selection or reselection is triggered, and the first notification information indicating resource block set 1 is delivered to the physical layer. At time T2, it is detected that resource block set 2 triggers the SL C-LBT failure, the resource selection or reselection is triggered. At this time, the SL C-LBT failure triggered by resource block set 1 has not been canceled, and the delivered first notification information indicates resource block set 1 and resource block set 2, and the second notification information is not delivered since there is no resource block set whose triggered SL C-LBT failure has been canceled. At time T6, resource block set n triggers the SL C-LBT failure, the resource selection or reselection is triggered. At this time, the SL C-LBT failure triggered by resource block set 1 has been canceled, and the SL C-LBT failure triggered by resource block set 2 has not been canceled. The delivered first notification information indicates resource block set 2 and resource block set n, and the delivered second notification information indicates resource block set 1, indicating that the SL C-LBT failure triggered by resource block set 1 has been canceled. Therefore, the MAC layer delivers the first notification information and/or the second notification information to the physical layer, and the physical layer directly determines the information of the resource block set that triggers the SL C-LBT failure through the first notification information, directly determines the information of the resource block set whose triggered SL C-LBT failure is canceled through the second notification information, or may infer the information of the resource block set whose triggered SL C-LBT failure is canceled through the first notification information.

In some embodiments, it is detected that the first resource block set triggers the SL C-LBT failure, the resource selection or reselection may be triggered. The physical layer of the first terminal 101 may determine a first candidate resource set based on the first resource block set, and provide the first candidate resource set to the MAC layer of the first terminal 101. The MAC layer of the first terminal 101 may select or reselect a resource from the first candidate resource set.

In some embodiments, the MAC layer of the first terminal 101 detects that the first resource block set triggers the SL C-LBT failure, which may trigger the resource selection or reselection.

Optionally, if the SL C-LBT failure triggered by the first resource block set is not cancelled, the physical layer of the first terminal 101 determines the first candidate resource set, in which a resource in the first resource block set is not included in the first candidate resource set. That is, if the SL C-LBT failure triggered by the first resource block set is not cancelled, the physical layer of the first terminal 101 may exclude the resource in the first resource block set when determining the first candidate resource set.

Optionally, if the SL C-LBT failure triggered by the first resource block set is not canceled, the physical layer of the first terminal 101 performs the resource selection or reselection on the first resource pool containing the first resource block set to determine the first candidate resource set, in which the resource in the first resource block set is not included in the first candidate resource set. For example, the first candidate resource set may be determined from the first resource pool, or from the first resource pool and other resource pools, which is not limited herein.

For example, the physical layer of the first terminal 101 may determine the first candidate resource set from resource pool B and resource pool C, in which resource block set b1 in resource pool B triggers the SL C-LBT failure and the triggered SL C-LBT failure is not canceled, and each resource block set included in resource pool C does not trigger the SL C-LBT failure. The physical layer of the first terminal 101 may use the resources in other resource block sets in resource pool B except the resources in resource block set b1 and the resources in all resource block sets in resource pool C as the resources in the first candidate resource set, that is, the first candidate resource set may include resources in other resource block sets in resource pool B except the resources in resource block set b1 and the resources in all resource block sets in resource pool C.

Optionally, the second resource pool may include partial PRBs of one or more resource block sets, the first resource block set belongs to the one or more resource block sets, and if the SL C-LBT failure triggered by the first resource block set is not canceled, the physical layer of the first terminal 101 determines the first candidate resource set, in which the first candidate resource set does not include a resource in the second resource pool.

Optionally, the third resource pool may include partial PRBs of one or more resource block sets, the first resource block set belongs to the one or more resource block sets, and if the SL C-LBT failure triggered by the first resource block set is not canceled, the physical layer of the first terminal 101 performs the resource selection or reselection on the third resource pool, in which a resource in the first resource block set is not included in the first candidate resource set.

In some embodiments, it is detected that the first resource block set triggers the SL C-LBT failure, the resource selection or reselection is triggered, the physical layer of the first terminal 101 determines a second candidate resource set and provides the second candidate resource set to the MAC layer of the first terminal 101, and the MAC layer of the first terminal 101 selects or reselects a resource from the second candidate resource set.

For example, the first candidate resource set does not include a resource in the resource block set that triggers the SL C-LBT failure, and the second candidate resource set is a candidate resource set determined by the physical layer based on an existing mechanism, which may include a resource in the resource block set that triggers the SL C-LBT failure.

In some embodiments, the MAC layer of the first terminal 101 detects that the first resource block set triggers the SL C-LBT failure, triggers the resource selection or reselection.

In some embodiments, if the SL C-LBT failure triggered by the first resource block set is not cancelled, the second candidate resource set includes a resource if the first resource block set, and the MAC layer of the first terminal 101 may not select or reselect the resource in the first resource block set. That is, if the SL C-LBT failure triggered by the first resource block set is not cancelled, the MAC layer of the first terminal 101 may exclude the resource in the first resource block set when selecting or reselecting the resource from the second candidate resource set.

In some embodiments, if the SL C-LBT failure triggered by the first resource block set is cancelled, the first terminal 101 is allowed to select or reselect a resource in the first resource block set when performing the resource selection or reselection.

At step S2102, the first terminal 101 sends SL data to the second terminal 102.

In some embodiments, the second terminal 102 may receive the SL data sent by the first terminal 101.

In some embodiments, if the SL C-LBT failure triggered by the first resource block set is not canceled, the first terminal 101 may not select or reselect the resource in the first resource block set to transmit any of PSCCH, PSSCH, PSFCH, synchronization signal block (SSB), etc.

In some embodiments, terms such as "send", "transmit", "report", "issue", "transfer", "transmit bidirectionally", "send and/or receive" can be used interchangeably.

In some embodiments, "obtain", "obtain", "get", "receive", "transmit", "transmit bidirectionally", "send and/or receive" can be interchangeable, and can be interpreted as receiving from other entities, obtaining from protocols, obtaining from a higher layer(s), obtaining by self-processing, autonomous implementation, etc.

The resource selection method involved in the embodiments of the present disclosure may include at least one of steps S2101 to S2102. For example, step S2101 may be implemented as an independent embodiment, step S2102 may be implemented as an independent embodiment, and steps S2101+S2102 may be implemented as independent embodiments, which is not limited herein.

In some embodiments, step S2102 is optional, and one or more of these steps may be omitted or replaced in different embodiments.

In implementations or embodiments, unless there is any contradiction, each step can be independent, arbitrarily combined or exchanged in order, the optional implementation or optional examples can be arbitrarily combined, and can be arbitrarily combined with any steps of other implementations or other examples.

According to one or more embodiments of the present disclosure, in a case where the SL C-LBT failure triggered by the first resource block set is not canceled, if the resource in the first resource block set is selected or reselected to send data, the LBT detection before sending the data may fail, resulting in the data being unable to be transmitted successfully. Therefore, according to whether the SL C-LBT failure triggered by the first resource block set is canceled, the resource is selected or reselected, and an available resource can be selected in time to send data, thereby improving the accuracy of the resource selection or reselection, and further improving the success rate of data transmission.

**FIG.** 3A is a flowchart of a resource selection method according to an embodiment of the present disclosure. As shown in FIG. 3A, an embodiment of the present disclosure relates to a resource selection method, which is used for the first terminal 101, and the method includes the following steps.

At step S3101, a resource is selected or reselected.

Regarding the optional implementation of step S3101, reference may be made to the optional implementation of step S2101 in FIG. 2 and other related parts in the embodiment involved in FIG. 2, which will not be described in detail here.

At step S3102, SL data is sent.

Regarding the optional implementation of step S3102, reference may be made to the optional implementation of step S2102 in FIG. 2 and other related parts in the embodiment involved in FIG. 2, which will not be described in detail here.

In some embodiments, the first terminal 101 sends the SL data to the second terminal 102, but the present disclosure is not limited thereto and the SL data may also be sent to other entities.

In some embodiments, step S3102 is optional, and one or more of these steps may be omitted or replaced in different embodiments.

The resource selection method involved in the embodiments of the present disclosure may include at least one of step S3101 to step S3102. For example, step S3101 may be implemented as an independent embodiment, step S3102 may be implemented as an independent embodiment, and step S3101+step S3102 may be implemented as independent embodiments, which is not limited herein.

In implementations or embodiments, unless there is any contradiction, each step may be independent, combined arbitrarily or exchanged in order, and the optional implementations or optional examples can be combined arbitrarily.

FIG. 3B is a flowchart of a resource selection method according to an embodiment of the present disclosure. As shown in FIG. 3B, an embodiment of the present disclosure relates to a resource selection method used for the first terminal 101, and the method includes the following steps.

At step S3201, an SL C-LBT failure triggered by a first resource block set is not cancelled, and a resource in the first resource block set is not selected or reselected when performing resource selection or reselection.

Regarding the optional implementation of step S3201, reference may be made to the optional implementations of step S2101 in FIG. 2 and step S3101 in FIG. 3A, and other related parts in the embodiments involved in FIG. 2 and FIG. 3A, which will not be repeated here.

At step S3202, SL data is sent using the selected or reselected resource.

Regarding the optional implementation of step S3202, reference may be made to the optional implementations of step S2102 of FIG. 2 and step S3102 of FIG. 3A, and other related parts in the embodiments involved in FIG. 2 and FIG. 3A, which will not be described in detail here.

In some embodiments, the first terminal 101 sends the SL data to the second terminal 102, but the present disclosure is not limited thereto and the SL data may also be sent to other entities.

For a detailed description of steps S3201-S3202, reference may be made to the embodiment of FIG. 2.

The resource selection method involved in the embodiments of the present disclosure may include at least one of step S3201 to step S3202. For example, step S3201 may be implemented as an independent embodiment, step S3202 may be implemented as an independent embodiment, and step S3201+step S3202 may be implemented as an independent embodiment, which is not limited herein.

In some embodiments, step S3202 is optional, and one or more of these steps may be omitted or replaced in different embodiments.

In implementations or embodiments, unless there is any contradiction, each step can be independent, combined arbitrarily or exchanged in order, and the optional implementations or optional examples can be combined arbitrarily.

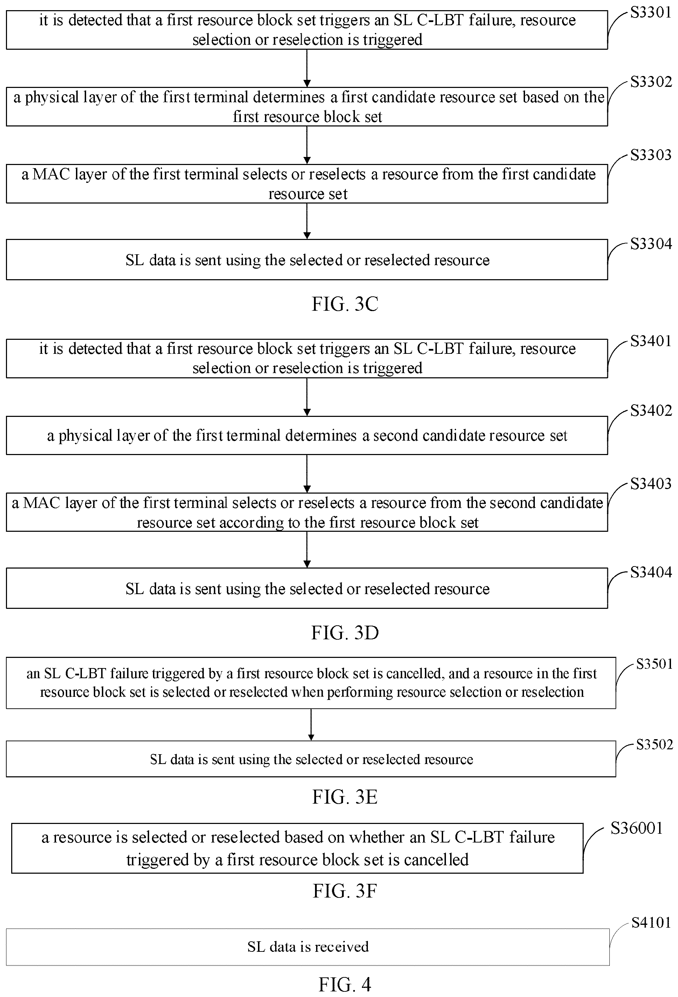

FIG. 3C is a flowchart of a resource selection method according to an embodiment of the present disclosure. As shown in FIG. 3C, an embodiment of the present disclosure relates to a resource selection method used for the first terminal 101, and the method includes the following steps.

At step S3301, it is detected that a first resource block set triggers an SL C-LBT failure, resource selection or reselection is triggered.

Regarding the optional implementation of step S3301, reference may be made to the optional implementations of step S2101 in FIG. 2, step S3101 in FIG. 3A, and step S3201 in FIG. 3B, and other related parts in the embodiments involved in FIG. 2, FIG. 3A, and FIG. 3B, which will not be repeated here.

At step S3302, a physical layer of the first terminal determines a first candidate resource set based on the first resource block set.

Regarding the optional implementation of step S3302, reference may be made to the optional implementations of step S2101 in FIG. 2, step S3101 in FIG. 3A and step S3201 in FIG. 3B, and other related parts in the embodiments involved in FIG. 2, FIG. 3A, and FIG. 3B, which will not be repeated here.

At step S3303, a MAC layer of the first terminal selects or reselects a resource from the first candidate resource set.

Regarding the optional implementation of step S3303 reference may be made to the optional implementations of step S2101 in FIG. 2, step S3101 in FIG. 3A and step S3201 in FIG. 3B, and other related parts in the embodiments involved in FIG. 2, FIG. 3A, and FIG. 3B, which will not be repeated here.

At step S3304, SL data is sent using the selected or reselected resource.

Regarding the optional implementation of step S3304, reference may be made to the optional implementations of step S2102 in FIG. 2, step S3102 in FIG. 3A and step S3202 in FIG. 3B, and other related parts in the embodiments involved in FIG. 2, FIG. 3A, and FIG. 3B, which will not be repeated here.

In some embodiments, the first terminal 101 sends the SL data to the second terminal 102, but the present disclosure is not limited thereto and the SL data may also be sent to other entities.

For a detailed description of steps S3301-S3304, reference may be made to the embodiment of FIG. 2 above.

The resource selection method involved in the embodiments of the present disclosure may include at least one of steps S3301 to S3304. For example, step S3301 may be implemented as an independent embodiment, step S3302 may be implemented as an independent embodiment, step S3303 may be implemented as an independent embodiment, step S3303 may be implemented as an independent embodiment, step S3301+step S3302 may be implemented as an independent embodiment, step S3301+step S3302+step S3303, step S3301+step S3302+step S3303+step S3304 may be implemented as independent embodiments, which is not limited herein.

In some embodiments, step S3304 is optional, and one or more of these steps may be omitted or replaced in different embodiments.

In implementations or embodiments, unless there is any contradiction, each step can be independent, combined arbitrarily or exchanged in order, and the optional methods or optional examples can be combined arbitrarily.

FIG. 3D is a flowchart of a resource selection method according to an embodiment of the present disclosure. As shown in FIG. 3D, an embodiment of the present disclosure relates to a resource selection method used for the first terminal 101, and the method includes the following steps.

At step S3401, it is detected that a first resource block set triggers an SL C-LBT failure, resource selection or reselection is triggered.

Regarding the optional implementation of step S3301, reference may be made to the optional implementations of step S2101 in FIG. 2, step S3101 in FIG. 3A, step S3201 in FIG. 3B and step S3301 in FIG. 3C, and other related parts in the embodiments involved in FIG. 2, FIG. 3A, FIG. 3B, and FIG. 3C, which will not be repeated here.

At step S3402, a physical layer of the first terminal determines a second candidate resource set.

Regarding the optional implementation of step S3402, reference may be made to the optional implementations of step S2101 in FIG. 2, step S3101 in FIG. 3A, step S3201 in FIG. 3B and step S3301 in FIG. 3C, and other related parts in the embodiments involved in FIG. 2, FIG. 3A, FIG. 3B, and FIG. 3C, which will not be repeated here.

At step S3403, a MAC layer of the first terminal selects or reselects a resource from the second candidate resource set according to the first resource block set.

Regarding the optional implementation of step S3403, reference may be made to the optional implementations of step S2101 in FIG. 2, step S3101 in FIG. 3A and step S3201 in FIG. 3B, and other related parts in the embodiments involved in FIG. 2, FIG. 3A, and FIG. 3B, which will not be repeated here.

At step S3404, SL data is sent using the selected or reselected resource.

Regarding the optional implementation of step S3404, reference may be made to the optional implementations of step S2102 in FIG. 2, step S3102 in FIG. 3A, step S3202 in FIG. 3B and step S3302 in FIG. 3C, and other related parts in the embodiments involved in FIG. 2, FIG. 3A, FIG. 3B, and FIG. 3C, which will not be repeated here.

In some embodiments, the first terminal 101 sends the SL data to the second terminal 102, but the present disclosure is not limited thereto and the SL data may also be sent to other entities.

For a detailed description of steps S3401-S3404, reference may be made to the embodiment of FIG. 2.

The resource selection method involved in the embodiments of the present disclosure may include at least one of steps S3401 to S3404. For example, step S3401 may be implemented as an independent embodiment, step S3402 may be implemented as an independent embodiment, step S3403 may be implemented as an independent embodiment, step S3404 may be implemented as an independent embodiment, step S3401+step S3402 may be implemented as an independent embodiment, step S3401+step S3402+step S3403, step S3401+step S3402+step S3403+step S3404 may be implemented as independent embodiments, which is not limited herein.

In some embodiments, step S3304 is optional, and one or more of these steps may be omitted or replaced in different embodiments.

In implementations or embodiments, unless there is any contradiction, each step can be independent, combined arbitrarily or exchanged in order, and the optional implementations or optional examples can be combined arbitrarily.

FIG. 3E is a flowchart of a resource selection method according to an embodiment of the present disclosure. As shown in FIG. 3E, an embodiment of the present disclosure relates to a resource selection method used for the first terminal 101, and the method includes the following steps.

At step S3501, an SL C-LBT failure triggered by a first resource block set is cancelled, and a resource in the first resource block set is selected or reselected when performing resource selection or reselection.

Regarding the optional implementation of step S3501, reference may be made to the optional implementation of step S2101 in FIG. 2 and other related parts in the embodiment involved in FIG. 2, which will not be described in detail here.

At step S3502, SL data is sent using the selected or reselected resource.

Regarding the optional implementation of step S3502, reference may be made to the optional implementations of step S2102 in FIG. 2, step S3102 in FIG. 3A, step S3202 in FIG. 3B, step S3302 in FIG. 3C and step S3404 in FIG. 3D, and other related parts in the embodiments involved in FIG. 2, FIG. 3A, FIG. 3B, FIG. 3C and FIG. 3D, which will not be repeated here.

In some embodiments, the first terminal 101 sends the SL data to the second terminal 102, but the present disclosure is not limited thereto and the SL data may also be sent to other entities.

For a detailed description of steps S3501-S3502, reference may be made to the embodiment of FIG. 2.

The resource selection method involved in the embodiments of the present disclosure may include at least one of step S3501 to step S3502. For example, step S3501 may be implemented as an independent embodiment, step S3502 may be implemented as an independent embodiment, and step S3501+step S3502 may be implemented as an independent embodiment, which is not limited herein.

In some embodiments, step S3502 is optional, and one or more of these steps may be omitted or replaced in different embodiments.

In implementations or embodiments, unless there is any contradiction, each step can be independent, combined arbitrarily or exchanged in order, and the optional implementations or optional examples can be combined arbitrarily.

In the embodiments of the present disclosure, step S3501 can be combined with step S3201 of FIG. 3B, step S3501 can be combined with steps S3301-S3303 of FIG. 3C, and step S3501 can be combined with steps S3401-S3403 of FIG. 3D.

FIG. 3F is a flowchart of a resource selection method according to an embodiment of the present disclosure. As shown in FIG. 3F, an embodiment of the present disclosure relates to a resource selection method used for the first terminal 101, and the method includes the following steps.

At step S3601, a resource is selected or reselected based on whether an SL C-LBT failure triggered by a first resource block set is cancelled.

In some embodiments, selecting or reselecting the resource based on whether the SL C-LBT failure triggered by the first resource block set is cancelled includes:

in a case where the SL C-LBT failure triggered by the first resource block set is not cancelled, not selecting or reselecting a resource in the first resource block set when performing a resource selection or reselection.

In some embodiments, selecting or reselecting the resource based on whether the SL C-LBT failure triggered by the first resource block set is cancelled includes:

in a case where the SL C-LBT failure triggered by the first resource block set is not cancelled, not selecting or reselecting a resource in the first resource block set when performing a resource selection or reselection on a first resource pool containing the first resource block set.

In some embodiments, selecting or reselecting the resource according to whether the SL C-LBT failure triggered by the first resource block set is cancelled includes:

in a case where a second resource pool contains a part of physical resource blocks (PRBs) of one or more resource block sets, the first resource block set belongs to the one or more resource block sets, and the SL C-LBT failure triggered by the first resource block set is not canceled, not selecting or reselecting a resource in the second resource pool.

In some embodiments, selecting or reselecting the resource according to whether the SL C-LBT failure triggered by the first resource block set is cancelled includes:

in a case where a third resource pool contains a part of PRBs of one or more resource block sets, the first resource block set belongs to the one or more resource block sets, and the SL C-LBT failure triggered by the first resource block set is not canceled, not selecting or reselecting a resource in the first resource block set when performing a resource selection or reselection on the third resource pool.

In some embodiments, the method further includes:
detecting that the first resource block set triggers the SL C-LBT failure, and sending, by a media access control (MAC) layer of the terminal, first notification information to a physical layer of the terminal, in which the first notification information indicates the first resource block set that triggers the SL C-LBT failure.

In some embodiments, the method further includes:
triggering, by a MAC layer of the terminal, a resource selection or resource reselection, and sending, by the MAC layer of the terminal, first notification information to a physical layer of the terminal, in which the first notification information indicates the first resource block set that triggers the SL C-LBT failure.

In some embodiments, the method further includes:
triggering, by a MAC layer of the terminal, a resource selection or resource reselection, and sending, by the MAC layer of the terminal, first notification information and a parameter related to the resource selection to a physical layer of the terminal, in which the first notification information indicates the first resource block set that triggers the SL C-LBT failure.

For example, the parameter related to the resource selection may be a related parameter that the physical layer of the first terminal needs to use when performing the resource selection.

In a possible implementation, when the MAC layer of the first terminal detects that the first resource block set triggers the SL C-LBT failure, it notifies the physical layer of the first terminal that the first resource block set triggers the SL C-LBT failure.

In some embodiments, the first notification information includes any one or more of:
a first identifier of the first resource block set; or
a second identifier of a resource pool to which the first resource block set belongs and a third identifier of the first resource block set in the resource pool to which the first resource block set belongs.

For example, the first resource block set has a unique identifier on the BWP, and the first identifier may be the unique identifier of the first resource block set on the BWP.

For example, the first resource block set has a unique identifier in the resource pool to which it belongs, and the third identifier may be the unique identifier of the first resource block set in the resource pool to which it belongs.

In some embodiments, the first notification information may be implemented through some terminal internal signaling. For example, the MAC layer of the first terminal 101 may deliver the first notification information to the physical layer of the first terminal through an internal source language. For example, the internal source language may be implemented by the first terminal 101. The first notification information notifies information of the resource block set that triggers the SL C-LBT failure. The first notification information may indicate one resource block set or multiple resource block sets.

In some embodiments, the method further includes:
determining that an SL C-LBT failure triggered by a second resource block set is cancelled, and sending, by the MAC layer of the terminal, second notification information to the physical layer of the terminal, in which the second notification information indicates the second resource block set whose triggered SL C-LBT failure is cancelled. For example, the second notification message is used to indicate that the second resource block set that triggers the SL C-LBT failure and whose triggered SL C-LBT failure thereafter is canceled.

In some embodiments, when the MAC layer of the terminal determines that the SL C-LBT failure triggered by the second resource block set is canceled, the MAC layer of the terminal may deliver the second notification information to the physical layer of the terminal, in which the second notification information may be used to indicate the second resource block set whose triggered SL C-LBT failure is canceled.

In some embodiments, the second resource block set may be one or more, that is, the resource block set whose triggered SL C-LBT failure is cancelled may be one or more, which is not limited herein.

In one possible implementation, when the MAC layer of the terminal detects that the SL C-LBT failure triggered by the second resource block set is cancelled, it notifies the physical layer of the terminal that the SL C-LBT failure triggered by the second resource block set is cancelled.

For example, when the first terminal 101 in the RRC connected state detects that the second resource block set triggers the SL C-LBT failure, it can report to the network device through an SL C-LBT failure MAC CE, and the SL C-LBT failure MAC CE indicates the second resource block set that triggers the SL C-LBT failure and whose triggered SL C-LBT failure has not been cancelled. For example, the first terminal 101 in the RRC connected state may cancel the SL C-LBT failure of the second resource block set when the SL C-LBT failure MAC CE is sent successfully. For example, the first terminal 101 in the RRC connected state cancels the SL C-LBT failure of the second resource block set when the SL C-LBT failure MAC CE is sent successfully, but the MAC layer of the first terminal 101 does not immediately deliver the second notification information to the physical layer of the terminal to notify the physical layer of the first terminal 101 that the SL C-LBT failure triggered by the second resource block set is cancelled. This is because the resource in the second resource block set has not been restored at this time. Therefore, if the physical layer is notified immediately, it may cause the physical layer to fail to exclude the resource in the second resource block set when determining a candidate resource set. Therefore, when the SL C-LBT failure MAC CE is sent successfully, the first terminal 101 may wait for an instruction of the network device to be received before delivering the second notification information to the physical layer of the terminal. For example, the instruction of the network device may be a resource reconfiguration instruction or another configuration instruction, which is not specifically limited in the present disclosure. For example, when the SL C-LBT failure MAC CE is sent successfully, the first terminal 101 may start a timer and wait until the timer expires before delivering the second notification information to the physical layer of the terminal. A timer length may be obtained through network configuration or pre-configuration. For example, the first terminal 101 in the RRC connected state may obtain the timer configuration through dedicated signaling, the first terminal 101 in the RRC IDLE/INACTIVE state may obtain the timer configuration through SIB (system message), and the first terminal 101 in the OOC state may obtain the timer configuration through pre-configuration. For example, the timer length may be determined by the first terminal 101 through implementation.

In some embodiments, the MAC layer of the terminal delivers the first notification information and/or the second notification information together with a parameter related to the resource selection to the physical layer of the terminal, in which the first notification information may be used to indicate the first resource block set that triggers the SL C-LBT failure, and the second notification information may be used to indicate the second resource block set whose triggered SL C-LBT failure is canceled.

For example, the MAC layer of the terminal triggers the resource selection or reselection. When performing the resource selection or reselection, the MAC layer of the terminal delivers the first notification information and/or the second notification information together with the parameter related to the resource selection to the physical layer of the terminal. For example, the MAC layer of the terminal may trigger the resource selection or reselection upon detecting that the first resource block set triggers the SL C-LBT failure, or may also trigger the resource selection or reselection under other conditions, for example there is no sufficient available resource or the available resource cannot meet a PDB requirement of data to be transmitted, etc., which is not specifically limited in the present disclosure.

In some embodiments, when the MAC layer of the terminal triggers the resource selection or reselection, the MAC layer of the terminal sends the first notification information together with the parameter related to the resource selection to the physical layer of the terminal, in which the first notification information may be used to indicate the first resource block set that triggers the SL C-LBT failure. For example, the first notification information may be delivered to the physical layer of the terminal as part of the parameter related to the resource selection. The parameter related to the resource selection includes but is not limited to one or more of:
a remaining PDB;
the number of subchannels used for PSSCH transmission in one subframe L_"subCH";
a resource reservation interval for PSSCH transmission P_"rsvp_TX"; or
a PSSCH transmission priority prio_TX.

In some embodiments, when the MAC layer of the terminal triggers the resource selection or reselection, the MAC layer of the terminal sends the first notification information together with the parameter related to the resource selection to the physical layer of the terminal.

In some embodiments, when triggering the resource selection or reselection, the MAC layer of the terminal sends the first notification information to the physical layer of the terminal, in which the first notification information may be used to indicate the first resource block set that triggers the SL C-LBT failure. For example, the first notification information may not be used as the parameter related to the resource selection, but may be delivered to the physical layer of the terminal separately.

In some embodiments, when the MAC layer of the terminal triggers the resource selection or reselection, the MAC layer of the terminal sends the first notification information to the physical layer of the terminal.

In some embodiments, when the MAC layer of the terminal triggers the resource selection or reselection, the MAC layer of the terminal sends the second notification information together with the parameter related to the resource selection to the physical layer of the terminal, in which the second notification information may be used to indicate the second resource block set whose triggered SL C-LBT failure has been cancelled. For example, the second notification information may be delivered to the physical layer of the terminal as part of the parameter related to the resource selection. The parameter related to the resource selection includes but is not limited to one or more of:
a remaining PDB;
the number of subchannels used for PSSCH transmission in one subframe L_"subCH";
a resource reservation interval for PSSCH transmission P_"rsvp_TX"; or
a PSSCH transmission priority prio_TX.

In some embodiments, when the MAC layer of the terminal triggers the resource selection or reselection, the MAC layer of the terminal sends the second notification information together with the parameter related to the resource selection to the physical layer of the terminal.

In some embodiments, when triggering the resource selection or reselection, the MAC layer of the terminal delivers the second notification information to the physical layer of the terminal, in which the second notification information may be used to indicate the second resource block set whose triggered SL C-LBT failure is cancelled. For example, the second notification information may not be used as the parameter related to the resource selection, but may be delivered to the physical layer of the terminal separately.

In some embodiments, when the MAC layer of the terminal triggers the resource selection or reselection, the MAC layer of the terminal may deliver the second notification information to the physical layer of the terminal.

In some embodiments, when performing the resource selection or reselection, the MAC layer of the terminal delivers information of the resource block set that triggers the SL C-LBT failure to the physical layer of the terminal. If the SL C-LBT failure triggered by the resource block set is canceled, the first notification information may be used to determine the resource block set whose triggered SL C-LBT failure is canceled.

For example, the first notification information delivered by the MAC layer of the first terminal 101 each time includes information of the resource block set that triggers the SL C-LBT failure and whose triggered SL C-LBT failure has not been cancelled at the current moment (delivering moment). For example, at time T1, it is detected that resource block set 1 triggers the SL C-LBT failure, the resource selection or reselection is triggered, and the first notification information indicating resource block set 1 is delivered to the physical layer. At time T2, it is detected that resource block set 2 triggers the SL C-LBT failure, the resource selection or reselection is triggered. At this time, the SL C-LBT failure triggered by resource block set 1 has not been cancelled, and the delivered first notification information indicates resource block set 1 and resource block set 2. At time T6, resource block set n triggers the SL C-LBT failure, the resource selection or reselection is triggered. At this time, the SL C-LBT failure triggered by resource block set 1 has been cancelled, and the SL C-LBT failure triggered by resource block set 2 has not been cancelled. The delivered first notification information indicates resource block set 2 and resource block set n, which indicates that the SL C-LBT failure triggered by resource block set 1 has been cancelled. Therefore, the MAC layer delivers the first notification information to the physical layer, and the physical layer may infer the information of the resource block set whose triggered SL C-LBT failure is cancelled through the first notification information.

In some embodiments, when performing the resource selection or reselection, the MAC layer of the terminal may deliver the first notification information indicating the resource block set that triggers the SL C-LBT failure and the second notification information indicating the resource block set whose triggered SL C-LBT failure is cancelled to the physical layer of the terminal. The resource block set indicated by the first notification information may be the newly added resource block set that triggers the SL C-LBT failure compared to the first notification information delivered previously, and the resource block set indicated by the second notification information is the resource block set whose triggered SL C-LBT failure is cancelled.

For example, at time T1, it is detected that resource block set 1 triggers the SL C-LBT failure, the resource selection or reselection is triggered, and the first notification information indicating resource block set 1 is delivered to the physical layer. At time T2, it is detected that resource block set 2 triggers the SL C-LBT failure, the resource selection or reselection is triggered. At this time, the SL C-LBT failure triggered by resource block set 1 has not been canceled, and the delivered first notification information indicates resource block set 2, and the second notification information is not delivered since there is no resource block set whose SL C-LBT failure is canceled. At time T6, resource block set n triggers the SL C-LBT failure, the resource selection or reselection is triggered, at this time, the SL C-LBT failure triggered by resource block set 1 has been canceled, and the SL C-LBT failure triggered by resource block set 2 has not been canceled. The delivered first notification information indicates resource block set n, and the delivered second notification information indicates resource block set 1, indicating that the SL C-LBT failure triggered by resource block set 1 has been canceled. Therefore, the MAC layer delivers the first notification information and/or the second notification information to the physical layer, and the physical layer directly determines the information of the resource block set that triggers the SL C-LBT failure through the first notification information, and directly determines the information of the resource block set whose triggered SL C-LBT failure is canceled through the second notification information.

In some embodiments, when performing the resource selection or reselection, the MAC layer of the terminal may deliver the first notification information indicating the resource block set that triggers the SL C-LBT failure and the second notification information indicating the resource block set whose triggered SL C-LBT failure is canceled to the physical layer of the terminal. For example, the first notification information delivered by the MAC layer of the terminal includes information of the resource block set that triggers the SL C-LBT failure and whose triggered SL C-LBT failure is not canceled at the current moment (delivering moment). The resource block set indicated by the second notification information is a resource block set whose triggered SL C-LBT failure is canceled.

For example, at time T1, it is detected that resource block set 1 triggers the SL C-LBT failure, the resource selection or reselection is triggered, and the first notification information indicating resource block set 1 is delivered to the physical layer. At time T2, it is detected that resource block set 2 triggers the SL C-LBT failure, the resource selection or reselection is triggered. At this time, the SL C-LBT failure triggered by resource block set 1 has not been canceled, and the delivered first notification information indicates resource block set 1 and resource block set 2, and the second notification information is not delivered since there is no resource block set whose triggered SL C-LBT failure has been canceled. At time T6, resource block set n triggers the SL C-LBT failure, the resource selection or reselection is triggered. At this time, the SL C-LBT failure triggered by resource block set 1 has been canceled, and the SL C-LBT failure triggered by resource block set 2 has not been canceled. The delivered first notification information indicates resource block set 2 and resource block set n, and the delivered second notification information indicates resource block set 1, indicating that the SL C-LBT failure triggered by resource block set 1 has been canceled. Therefore, the MAC layer delivers the first notification information and/or the second notification information to the physical layer, and the physical layer directly determines the information of the resource block set that triggers the SL C-LBT failure through the first notification information, directly determines the information of the resource block set whose triggered SL C-LBT failure is canceled through the second notification information, or may infer the information of the resource block set whose triggered SL C-LBT failure is canceled through the first notification information.

In some embodiments, the method may further include:
triggering, by the MAC layer of the terminal, a resource selection or resource reselection, and delivering, by the MAC layer of the terminal, second notification information to a physical layer of the terminal, in which the second notification information indicates the second resource block set whose triggered SL C-LBT failure is cancelled.

In some embodiments, the method may further include:
triggering, by the MAC layer of the terminal, a resource selection or resource reselection, and sending, by the MAC layer of the terminal, second notification information and a parameter related to the resource selection to a physical layer of the terminal, in which the second notification information indicates the second resource block set whose triggered SL C-LBT failure is cancelled.

In some embodiments, the second notification information includes any one or more of:
a fourth identifier of the second resource block set; or
a fifth identifier of a resource pool to which the second resource block set belongs and a sixth identifier of the second resource block set in the resource pool to which the second resource block set belongs.

For example, the second resource block set has a unique identifier on the BWP, and the fourth identifier may be the unique identifier of the second resource block set on the BWP.

For example, the second resource block set has a unique identifier in the resource pool to which it belongs, and the sixth identifier may be the unique identifier of the second resource block set in the resource pool to which it belongs.

In some embodiments, selecting or reselecting the resource according to whether the SL C-LBT failure triggered by the first resource block set is cancelled includes:
detecting that the first resource block set triggers the SL C-LBT failure, and triggering a resource selection or reselection;
determining, by the physical layer of the terminal, a first candidate resource set according to the first resource block set; and
selecting or reselecting, by the MAC layer of the terminal, the resource from the first candidate resource set.

In some embodiments, determining, by the physical layer of the terminal, the first candidate resource set according to the first resource block set includes:
in a case where the SL C-LBT failure triggered by the first resource block set is not canceled, determining, by the physical layer of the terminal, the first candidate resource set, in which a resource in the first resource block set is not contained in the first candidate resource set.

**In** some embodiments, in a case where the SL C-LBT failure triggered by the first resource block set is not canceled, determining, by the physical layer of the terminal, the first candidate resource set includes:
in a case where the SL C-LBT failure triggered by the first resource block set is not canceled, performing, by the physical layer of the terminal, the resource selection or reselection on a first resource pool containing the first resource block set and determining the first candidate resource set, in which the resource in the first resource block set is not contained in the first candidate resource set.

**In** some embodiments, in a case where the SL C-LBT failure triggered by the first resource block set is not canceled, determining, by the physical layer of the terminal, the first candidate resource set includes:
in a case where a second resource pool contains a part of physical resource blocks (PRBs) of one or more resource block sets, the first resource block set belongs to the one or more resource block sets, and the SL C-LBT failure triggered by the first resource block set is not canceled, determining, by the physical layer of the terminal, the first candidate resource set, in which first candidate resource set does not contain a resource in the second resource pool.

In some embodiments, in a case where the SL C-LBT failure triggered by the first resource block set is not canceled, determining, by the physical layer of the terminal, the first candidate resource set includes:
in a case where a third resource pool contains a part of physical resource blocks (PRBs) of one or more resource block sets, the first resource block set belongs to the one or more resource block sets, and the SL C-LBT failure triggered by the first resource block set is not canceled, performing, by the physical layer of the terminal, the resource selection or reselection on the third resource pool, in which the resource in the first resource block set is not contained in the first candidate resource set.

In some embodiments, selecting or reselecting the resource according to whether the SL C-LBT failure triggered by the first resource block set is cancelled includes:
detecting that the first resource block set triggers the SL C-LBT failure, and triggering a resource selection or reselection;
determining, by the physical layer of the terminal, a second candidate resource set; and
selecting or reselecting, by the MAC layer of the terminal, the resource from the second candidate resource set.

For example, the first candidate resource set does not contain the resource in the resource block set that triggers the SL C-LBT failure, while the second candidate resource set is a candidate resource set determined by the physical layer based on an existing mechanism, which may contain the resource in the resource block set that triggers the SL C-LBT failure.

In some embodiments, selecting or reselecting, by the MAC layer of the terminal, the resource from the second candidate resource set includes:
in a case where the SL C-LBT failure triggered by the first resource block set is not canceled and the second candidate resource set contains a resource in the first resource block set, not selecting or reselecting the resource in the first resource block set when the MAC layer of the terminal selects or reselects the resource from the second candidate resource set.

In some embodiments, the method may further include:
detecting that the first resource block set triggers the SL C-LBT failure, and reselecting a resource pool, in which the resource pool reselected is one or more of:
a resource pool, in which each of one or more resource block sets contained in the resource pool has not triggered the SL C-LBT failure;
a resource pool, in which the resource pool contains one or more resource block sets that have not triggered SL C-LBT failures;
a resource pool, in which the resource pool contains a part of PRBs of one resource block set that has not triggered the SL C-LBT failure; or
a resource pool, in which the resource pool contains a part of PRBs of a plurality of resource block sets, one or more resource block sets of the plurality of resource block sets have not triggered SL C-LBT failures.

In some embodiments, selecting or reselecting, by the MAC layer of the terminal, the resource from the second candidate resource set includes:
in a case where the SL C-LBT failure triggered by the first resource block set is cancelled, allowing to select or reselect a resource in the first resource block set when performing a resource selection or reselection.

In some embodiments, the method may further include:
sending SL data to a second terminal using the resource selected or reselected.

For a detailed description of step S31001, reference may be made to the embodiments of FIG. 2, FIG. 3A-FIG. 3E.

In implementations or embodiments, unless there is any contradiction, each step can be independent, arbitrarily combined or exchanged in order, and the optional implementation or optional examples can be arbitrarily combined.

In implementations or embodiments, unless there is any contradiction, the optional implementation or optional examples can be arbitrarily combined.

According to one or more embodiments of the present disclosure, in a case where the SL C-LBT failure triggered by the first resource block set is not canceled, if the resource in the first resource block set is selected or reselected to send data, the LBT detection before sending the data may fail, resulting in the data being unable to be transmitted successfully. Therefore, according to whether the SL C-LBT failure triggered by the first resource block set is canceled, the resource is selected or reselected, and an available resource can be selected in time to send data, thereby improving the accuracy of the resource selection or reselection, and further improving the success rate of data transmission.

FIG. 4 is a flowchart of a resource selection method according to an embodiment of the present disclosure. As shown in FIG. 4, an embodiment of the present disclosure relates to a resource selection method, which is used for the second terminal 102, and the method includes the following step.

At step S4101, SL data is received.

In some embodiments, the second terminal 102 may receive the SL data sent by the first terminal 101.

In some embodiments, the SL data may be a resource that the first terminal 101 selects or reselects based on whether the SL C-LBT failure triggered by the first resource block set is cancelled.

Regarding the optional implementation of step S4101, reference may be made to the above-mentioned steps S2102, S3102, S3202, 3304, S3404, etc., which will not be repeated here.

For a detailed description of step S4101, reference may be made to the embodiment of FIG. 2 above.

In implementations or embodiments, the optional implementation or optional examples can be arbitrarily combined.

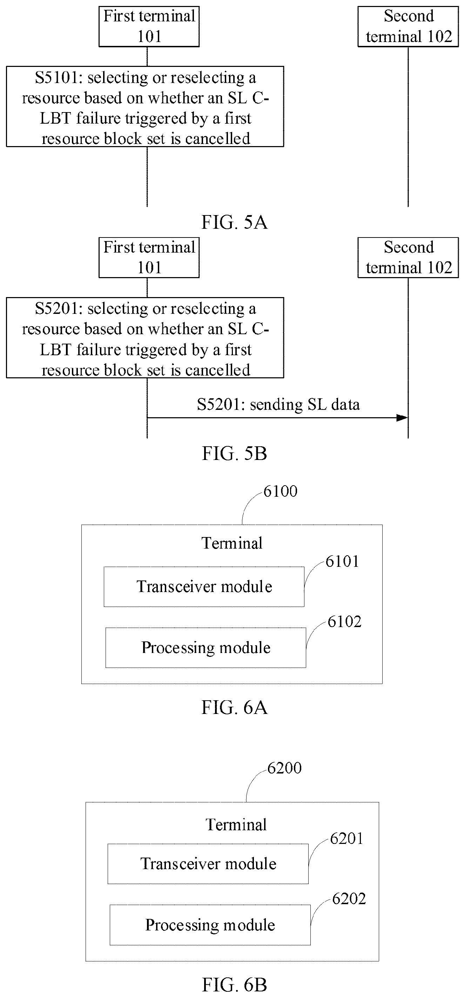

FIG. 5A is an interactive schematic diagram of a resource selection method according to an embodiment of the present disclosure. As shown in FIG. 5A, an embodiment of the present disclosure relates to a resource selection method, which is used for the communication system 100 including the first terminal 101 and the second terminal 102, and the method includes the following step.

At step S5101, the first terminal 101 selects or reselects a resource based on whether an SL C-LBT failure triggered by a first resource block set is cancelled.

Regarding the optional implementation of step S5101, reference may be made to the above-mentioned steps S2101, step S3101, S3201, step S3301-step S3303, step S3401-step S3403, step S3501, step S3601, etc., which will not be repeated here.

FIG. 5B is an interactive schematic diagram of a resource selection method according to an embodiment of the present disclosure. As shown in FIG. 5B, an embodiment of the present disclosure relates to a resource selection method, which is used for the communication system 100 including the first terminal 101 and the second terminal 102, and the method includes the following step.

At step S5201, the first terminal 101 selects or reselects a resource based on whether an SL C-LBT failure triggered by a first resource block set is cancelled.

Regarding the optional implementation of step S5201, reference may be made to the optional implementation of the above-mentioned step S2101, which will not be repeated here.

At step S5202, the first terminal 101 sends SL data to the second terminal 102.

Regarding the optional implementation of step S5102, reference may be made to the above-mentioned steps S2102, S3102, S3202, 3304, S3404, S4101, etc., which will not be repeated here.

In some embodiments, the above method may include the method described in the above embodiments on the communication system side, the first terminal side, the second terminal side, etc., which will not be repeated here.

In implementations or embodiments, unless there is any contradiction, each step can be independent, arbitrarily combined or exchanged in order, the optional implementations or optional examples can be arbitrarily combined, and can be arbitrarily combined with any steps of other implementations or other examples.

According to one or more embodiments of the present disclosure, in a case where the SL C-LBT failure triggered by the first resource block set is not canceled, if the resource in the first resource block set is selected or reselected to send data, the LBT detection before sending the data may fail, resulting in the data being unable to be transmitted successfully. Therefore, according to whether the SL C-LBT failure triggered by the first resource block set is canceled, the resource is selected or reselected, so that an available resource can be selected in time to send data, thereby improving the accuracy of the resource selection or reselection, and further improving the success rate of data transmission.

The following is an exemplary introduction to the above method.

In an optional embodiment, the terminal detects that the RB set triggers the SL C-LBT failure. Before the SL C-LBT failure of the RB set is cancelled, the terminal cannot select or reselect resources in the RB set.

Optionally, one resource pool includes one or more RB sets. If the terminal detects that the RB set triggers the SL C-LBT failure, before the SL C-LBT failure of the RB set is canceled, the terminal does not select or reselect resources in the RB set when performing the resource selection or reselection on the resource pool.

Optionally, one resource pool belongs to some PRBs of one RB set. If the terminal detects that the RB set triggers the SL C-LBT failure, before the SL C-LBT failure of the RB set is canceled, the terminal cannot select or reselect resources in the resource pool. The terminal triggers the resource selection or reselection, reselects a resource pool, and reselects resources in the reselected resource pool. The reselected resource pool contains at least one RB set that does not trigger the SL C-LBT failure or the reselected resource pool contains one or more RB sets each not triggering the SL C-LBT failure (this type of resource pool is reselected first). Or the reselected resource pool belongs to some PRBs of one RB set, and the RB set does not trigger the SL C-LBT failure. Or the reselected resource pool belongs to some PRBs of multiple RB sets respectively, and the multiple RB sets contain at least one RB set that does not trigger the SL C-LBT failure. Or the reselected resource pool belongs to some PRBs of multiple RB sets respectively, and the multiple RB sets do not trigger SL C-LBT failures.

Optionally, one resource pool belongs to some PRBs of multiple RB sets respectively. If the terminal detects that at least one RB set triggers the SL C-LBT failure, before the SL C-LBT failure of the at least one RB set is canceled, the terminal does not select or reselect resources in the at least one RB set when performing resource selection or reselection on the resource pool.

Optionally, one resource pool belongs to some PRBs of multiple RB sets respectively. If the terminal detects that each of multiple RB sets triggers the SL C-LBT failure, before the SL C-LBT failures of the multiple RB sets are canceled, the terminal cannot select or reselect resources in the resource pool. The terminal triggers the resource reselection, reselects a resource pool, and reselects resources in the reselected resource pool. The reselected resource pool contains at least one RB set that does not triggered the SL C-LBT failure or the reselected resource pool contains one or more RB sets each not triggering the SL C-LBT failure (this type of resource pool is reselected first). Or the reselected resource pool belongs to some PRBs of one RB set, and the RB set does not trigger the SL C-LBT failure. Or the reselected resource pool belongs to some PRBs of multiple RB sets, and the multiple RB sets contain at least one RB set that does not trigger the SL C-LBT failure. Or the reselected resource pool belongs to some PRBs of multiple RB sets, and each of the multiple RB sets does not trigger the SL C-LBT failure.

Optionally, it is applicable to a terminal operating in mode 2. Specifically, the terminal may be in an RRC connected state, an RRC IDLE (idle) or INACTIVE (dormant) state, or an OOC state. Specifically, the terminal cannot select or reselect resources in the RB set for transmission of PSSCH and/or PSCCH and/or PSFCH and/or SSB, etc.

In an optional embodiment, the terminal detects that the RB set triggers the SL C-LBT failure, and the MAC layer of the terminal notifies the physical layer of the terminal of the RB set that triggers the SL C-LBT failure. The physical layer excludes resources in the RB set when determining the candidate resource set.

Optionally, the terminal detects that the RB set triggers the SL C-LBT failure, and the MAC layer of the terminal notifies the physical layer of the terminal of the RB set that triggers the SL C-LBT failure. Specifically, it can be indicated by the index (identifier) associated with the RB set (RB set has a unique identifier on the BWP) or by the index of the resource pool to which the RB set belongs and the index of the RB set in the resource pool (RB set has a unique identifier in the resource pool), or it is left to the terminal to implement indication of the RB set. The RB set can be one or more, for example.

Optionally, when the physical layer determines how to exclude resources in the RB set when determining the candidate resource set, it can exclude them through various embodiments under the first optional embodiment, in which "not selecting or reselecting" can be replaced with "the candidate resource set does not include" and the like.

In an optional embodiment, when the terminal detects that the RB set triggers the SL C-LBT failure, the MAC layer of the terminal excludes resources in the RB set when selecting or reselecting resources from a candidate resource set.

Optionally, when the MAC layer selects or reselects resources from the candidate resource set, how to exclude the resources on the RB set can be determined through the various embodiments under the first optional embodiment. This embodiment does not require the MAC layer of the terminal to notify the physical layer of the terminal of the RB set that triggers the SL C-LBT failure.

Optionally, the MAC layer of the terminal may also be allowed to notify the physical layer of the terminal of the RB set that triggers the SL C-LBT failure. In this case, if the physical layer does not exclude the resources in the RB set when determining the candidate resource set, the MAC layer excludes the resources in the RB set when selecting or reselecting resources from the candidate resource set.

In the embodiments of the present disclosure, part or all of the steps and their optional implementations may be arbitrarily combined with part or all of the steps in other embodiments, or may be arbitrarily combined with optional implementations of other embodiments.

The embodiments of the present disclosure also propose an apparatus for implementing any of the above methods, for example, an apparatus is proposed, the above apparatus includes units or modules for implementing various steps performed by the terminal in any of the above methods. For another example, an apparatus is proposed, including units or modules for implementing various steps performed by the network device (such as an access network device, a core network function node, a core network device, etc.) in any of the above methods.

**It** should be understood that the division of the units or modules in the above apparatus is only a division of logical functions, and in an actual implementation, they may be fully or partially integrated into one physical entity, or they may be physically separated. In addition, the units or modules in the apparatus can be implemented in the form of processor calling software: for example, the apparatus includes a processor, the processor is connected to a memory, and instructions are stored in the memory. The processor calls the instructions stored in the memory to implement any of the above methods or implement the functions of the units or modules of the above apparatus. The processor is, for example, a general-purpose processor, such as a central processing unit (CPU) or a microprocessor, and the memory is a memory inside the device or a memory outside the device. Alternatively, the units or modules in the apparatus can be implemented in the form of hardware circuits, and the functions of some or all of the units or modules can be realized by designing the hardware circuits. The above hardware circuits can be understood as one or more processors. For example, in one implementation, the above hardware circuit is an application-specific integrated circuit (ASIC), and the functions of some or all of the above units or modules are realized by designing the logical relationship of the components in the circuit. For example, in another implementation, the above hardware circuit can be realized by a programmable logic device (PLD), taking a field programmable gate array (FPGA) as an example, which can include a large number of logic gate circuits, and the connection relationship between the logic gate circuits is configured by a configuration file, so as to realize the functions of some or all of the above units or modules. All units or modules of the above apparatuses can be realized in the form of processor calling software, or in the form of a hardware circuit, or in part by processor calling software, and the rest by a hardware circuit.

In the embodiments of the present disclosure, the processor is a circuit with a signal processing capability. In one implementation, the processor may be a circuit with an instruction reading and running capability, such as a central processing unit (CPU), a microprocessor, a graphics processing unit (GPU) (which may be understood as a microprocessor), or a digital signal processor (DSP), etc. In another implementation, the processor may realize certain functions through the logical relationship of the hardware circuit, and the logical relationship of the above hardware circuit is fixed or reconfigurable, such as a hardware circuit implemented by a processor as an application-specific integrated circuit (ASIC) or a programmable logic device (PLD), such as an FPGA. In a reconfigurable hardware circuit, the processor loads a configuration document to implement the process of hardware circuit configuration, which may be understood as the process of the processor loading instructions to implement the functions of some or all of the above units or modules. In addition, it may also be a hardware circuit designed for artificial intelligence, which may be understood as an ASIC, such as a neural network processing unit (NPU), a tensor processing unit (TPU), a deep learning processing unit (DPU), etc.

FIG. 6A is a schematic diagram of a terminal proposed in an embodiment of the present disclosure. As shown in FIG. 6A, the terminal 6100 may include at least one a transceiver module 6101 or a processing module 6102. In some embodiments, the above-mentioned processing module 6102 is configured to select or reselect a resource according to whether an SL C-LBT failure triggered by is cancelled. Optionally, the above-mentioned transceiver module 6101 is configured to send SL data to a second terminal using the selected or reselected resource. Optionally, the above-mentioned transceiver module 6101 is used to execute the communication steps (such step S2102, which is not limited) such as "sending and/or receiving" performed by the first terminal 101 in any of the above methods, which will not be repeated here. Optionally, the above-mentioned processing module is used to execute other steps (such step S2101, which is not limited) performed by the first terminal 101 in any of the above methods, which will not be repeated here.

FIG. 6B is a schematic diagram of a terminal proposed in an embodiment of the present disclosure. As shown in FIG. 6b, the terminal 6200 may include at least one a transceiver module 6201 or a processing module 6202. In some embodiments, the above-mentioned transceiver module is configured to receive SL data sent by a first terminal using a resource selected or reselected by the first terminal based on whether an SL C-LBT failure triggered by is cancelled. Optionally, the above-mentioned transceiver module is used to execute the communication steps (such step S2102, which is not limited) such as "sending and/or receiving" performed by the second terminal 101 in any of the above methods, which will not be repeated here. Optionally, the above-mentioned processing module is used to execute other steps (such step S2101, which is not limited) performed by the second terminal 101 in any of the above methods, which will not be repeated here.

In some embodiments, the transceiver module may include a sending module and/or a receiving module, and the sending module and the receiving module may be separate or integrated. Optionally, the transceiver module may be interchangeable with the transceiver.

In some embodiments, the processing module may be one module or include multiple submodules. Optionally, the multiple submodules respectively execute all or part of the steps required to be executed by the processing module. Optionally, the processing module may be interchangeable with the processor.

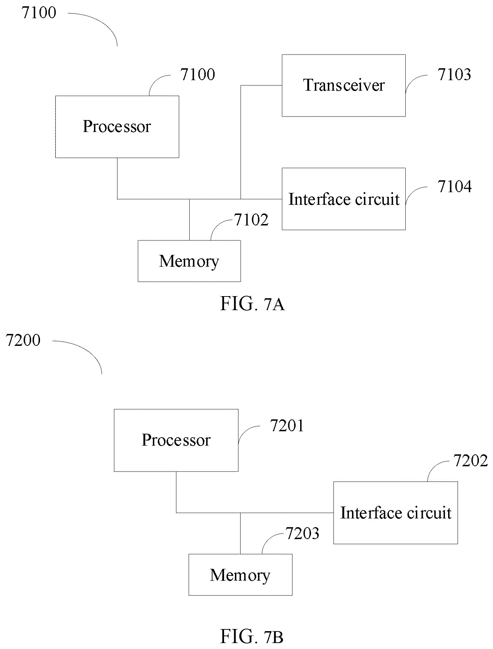

FIG. 7A is a schematic diagram of a communication device 7100 proposed in an embodiment of the present disclosure. The communication device 7100 may be a network device (e.g., an access network device, a core network device, etc.), or a terminal (e.g., a user equipment, etc.), or a chip, a chip system, or a processor that supports a network device to implement any of the above methods, or a chip, a chip system, or a processor that supports a terminal to implement any of the above methods. The communication device 7100 may be used to implement the method described in the above method embodiments, and for details, reference may be made to the description in the above method embodiments.

As shown in FIG. 7A, the communication device 7100 includes one or more processors 7101. The processor 7101 may be a general-purpose processor or a dedicated processor, for example, a baseband processor or a central processing unit. The baseband processor may be used to process a communication protocol and communication data, and the central processing unit may be used to control the communication apparatus (such as a base station, a baseband chip, a terminal, a terminal chip, a DU or a CU, etc.) to execute a program and process data of the program. The communication device 7100 executes any of the above methods.

In some embodiments, the communication device 7100 further includes one or more memories 7102 for storing instructions. Optionally, all or part of the memory 7102 may be outside the communication device 7100.

In some embodiments, the communication device 7100 further includes one or more transceivers 7103. When the communication device 7100 includes one or more transceivers 7103, at least one of the communication steps (such step S2102, which is not limited) such as sending and/or receiving in the above methods are performed by the transceiver 7103, and the other steps (such step S2101, which is not limited) are performed by the processor 7101.

In some embodiments, the transceiver may include a receiver and/or a transmitter, and the receiver and the transmitter may be separate or integrated. Optionally, the terms such as "transceiver", "transceiver unit", "transceiver machine", "transceiver circuit", etc. may be exchangeable with each other, the terms such as "transceiver", "transceiver unit", "transceiver machine", "transceiver circuit", etc. may be exchangeable with each other, and the terms such as "receiver", "receiving unit", "receiver", "receiving circuit", etc. may be exchangeable with each other.

In some embodiments, the communication device 7100 further includes one or more interface circuits 7104. Optionally, the interface circuit 7104 is connected to the memory 7102. The interface circuit 7104 may be used to receive signals from the memory 7102 or other apparatuses, and may be used to send signals to the memory 7102 or other apparatuses. For example, the interface circuit 7104 may read instructions stored in the memory 7102 and send the instructions to the processor 7101.

The communication device 7100 described in the above embodiments may be a network device or a terminal, but the scope of the communication device 7100 described in the present disclosure is not limited thereto, and the structure of the communication device 7100 may not be limited by FIG. 7A. The communication device may be an independent device or may be part of a larger device. For example, the communication device may be: 1) an independent integrated circuit (IC), or a chip, or a chip system or subsystem; (2) a collection of one or more ICs, optionally, the above IC collection may also include a storage component for storing data and programs; (3) an ASIC, such as a modem; (4) a module that can be embedded in other devices; (5) a receiver, a terminal, an intelligent terminal, a cellular phone, a wireless device, a handheld device, a mobile unit, a vehicle-mounted device, a network device, a cloud device, an artificial intelligence device, etc.; (6) others, etc.

FIG. 7B is a schematic diagram of a chip 7200 proposed in an embodiment of the present disclosure. In case where the communication device 7100 may be a chip or a chip system, reference may be made to the schematic diagram of the chip 7200 shown in FIG. 7B, but the present disclosure is not limited thereto.

The chip 7200 includes one or more processors 7201, and the chip 7200 executes any of the above methods.

In some embodiments, the chip 7200 further includes one or more interface circuits 7202. Optionally, the interface circuit 7202 is connected to the memory 7203. The interface circuit 7202 may be used to receive signals from the memory 7203 or other apparatuses, and the interface circuit 7202 may be used to send signals to the memory 7203 or other apparatuses. For example, the interface circuit 7202 may read instructions stored in the memory 7203 and send the instructions to the processor 7201.

In some embodiments, the interface circuit 7202 performs at least one of the communication steps (such as step S2102, which is not limited) such as "sending and/or receiving" in the above method, and the processor 7201 performs at least one of the other steps (such as step S2101, which is not limited).

In some embodiments, the terms such as "interface circuit", "interface", "transceiver pin", and "transceiver" may be exchangeable with each other.

In some embodiments, the chip 7200 further includes one or more memories 7203 for storing instructions. Optionally, all or part of the memory 7203 may be outside the chip 7200.

The present disclosure also proposes a storage medium, on which instructions are stored, and when the instructions are executed on the communication device 7100, the communication device 8100 executes any of the above methods. Optionally, the storage medium is an electronic storage medium. Optionally, the storage medium is a computer-readable storage medium, but is not limited to thereto, and it may also be a storage medium readable by other apparatuses. Optionally, the storage medium may be a non-transitory storage medium, but is not limited to thereto, and it can also be a temporary storage medium.

The present disclosure also proposes a program product, which, when executed by the communication device 7100, enables the communication device 7100 to execute any of the above methods. Optionally, the program product is a computer program product.

## Claims

1. A resource selection method, performed by a user equipment (UE), comprising:
selecting or reselecting a resource according to whether a sidelink (SL) consistent listen-before-talk (C-LBT) failure triggered by a first resource block set is cancelled.

2. The method of claim 1, wherein selecting or reselecting the resource according to whether the SL C-LBT failure triggered by the first resource block set is cancelled comprises:
in a case where the SL C-LBT failure triggered by the first resource block set is not cancelled, not selecting or reselecting a resource in the first resource block set when performing a resource selection or reselection.

3. The method of claim 1 or 2, wherein selecting or reselecting the resource according to whether the SL C-LBT failure triggered by the first resource block set is cancelled comprises:
in a case where the SL C-LBT failure triggered by the first resource block set is not cancelled, not selecting or reselecting a resource in the first resource block set when performing a resource selection or reselection on a first resource pool containing the first resource block set.

4. The method of any of claims 1-3, wherein selecting or reselecting the resource according to whether the SL C-LBT failure triggered by the first resource block set is cancelled comprises:
in a case where a second resource pool contains a part of physical resource blocks (PRBs) of one or more resource block sets, the first resource block set belongs to the one or more resource block sets, and the SL C-LBT failure triggered by the first resource block set is not canceled, not selecting or reselecting a resource in the second resource pool.

5. The method of any of claims 1-4, wherein selecting or reselecting the resource according to whether the SL C-LBT failure triggered by the first resource block set is cancelled comprises:
in a case where a third resource pool contains a part of physical resource blocks (PRBs) of one or more resource block sets, the first resource block set belongs to the one or more resource block sets, and the SL C-LBT failure triggered by the first resource block set is not canceled, not selecting or reselecting a resource in the first resource block set when performing a resource selection or reselection on the third resource pool.

6. The method of any of claims 1-5, further comprising:
detecting that the first resource block set triggers the SL C-LBT failure, and sending, by a media access control (MAC) layer of the UE, first notification information to a physical layer of the UE, wherein the first notification information indicates the first resource block set that triggers the SL C-LBT failure.

7. The method of any of claims 1-5, further comprising:
triggering, by a MAC layer of the UE, a resource selection or resource reselection, and sending, by the MAC layer of the UE, first notification information to a physical layer of the UE, wherein the first notification information indicates the first resource block set that triggers the SL C-LBT failure.

8. The method of any of claims 1-5, further comprising:
triggering, by a MAC layer of the UE, a resource selection or resource reselection, and sending, by the MAC layer of the UE, first notification information and a parameter related to the resource selection to a physical layer of the UE, wherein the first notification information indicates the first resource block set that triggers the SL C-LBT failure.

9. The method of any of claims 6-8, wherein the first notification information comprises any one or more of:
a first identifier of the first resource block set; or
a second identifier of a resource pool to which the first resource block set belongs and a third identifier of the first resource block set in the resource pool to which the first resource block set belongs.

10. The method of any of claims 6-9, further comprising:
determining that an SL C-LBT failure triggered by a second resource block set is cancelled, and sending, by the MAC layer of the UE, second notification information to the physical layer of the UE, wherein the second notification information indicates the second resource block set whose triggered SL C-LBT failure is cancelled.

11. The method of any of claims 6-9, further comprising:
triggering, by the MAC layer of the UE, a resource selection or resource reselection, and sending, by the MAC layer of the UE, second notification information to a physical layer of the UE, wherein the second notification information indicates the second resource block set whose triggered SL C-LBT failure is cancelled.

12. The method of any of claims 6-9, further comprising:
triggering, by the MAC layer of the UE, a resource selection or resource reselection, and sending, by the MAC layer of the UE, second notification information and a parameter related to the resource selection to a physical layer of the UE, wherein the second notification information indicates the second resource block set whose triggered SL C-LBT failure is cancelled.

13. The method of any of claims 10-12, wherein the second notification information comprises any one or more of:
a fourth identifier of the second resource block set; or
a fifth identifier of a resource pool to which the second resource block set belongs and a sixth identifier of the second resource block set in the resource pool to which the second resource block set belongs.

14. The method of any of claims 6-13, wherein selecting or reselecting the resource according to whether the SL C-LBT failure triggered by the first resource block set is cancelled comprises:
detecting that the first resource block set triggers the SL C-LBT failure, and triggering a resource selection or reselection;
determining, by the physical layer of the UE, a first candidate resource set according to the first resource block set; and
selecting or reselecting, by the MAC layer of the UE, the resource from the first candidate resource set.

15. The method of claim 14, wherein determining, by the physical layer of the UE, the first candidate resource set according to the first resource block set comprises:
in a case where the SL C-LBT failure triggered by the first resource block set is not canceled, determining, by the physical layer of the UE, the first candidate resource set, wherein a resource in the first resource block set is not contained in the first candidate resource set.

16. The method of claim 15, wherein in a case where the SL C-LBT failure triggered by the first resource block set is not canceled, determining, by the physical layer of the UE, the first candidate resource set, wherein the resource in the first resource block set is not contained in the first candidate resource set comprises:
in a case where the SL C-LBT failure triggered by the first resource block set is not canceled, performing, by the physical layer of the UE, the resource selection or reselection on a first resource pool containing the first resource block set and determining the first candidate resource set, wherein the resource in the first resource block set is not contained in the first candidate resource set.

17. The method of claim 15 or 16, wherein in a case where the SL C-LBT failure triggered by the first resource block set is not canceled, determining, by the physical layer of the UE, the first candidate resource set, wherein the resource in the first resource block set is not contained in the first candidate resource set comprises:
in a case where a second resource pool contains a part of physical resource blocks (PRBs) of one or more resource block sets, the first resource block set belongs to the one or more resource block sets, and the SL C-LBT failure triggered by the first resource block set is not canceled, determining, by the physical layer of the UE, the first candidate resource set, wherein first candidate resource set does not contains a resource in the second resource pool.

18. The method of any of claims 15-17, wherein in a case where the SL C-LBT failure triggered by the first resource block set is not canceled, determining, by the physical layer of the UE, the first candidate resource set, wherein the resource in the first resource block set is not contained in the first candidate resource set comprises:
in a case where a third resource pool contains a part of physical resource blocks (PRBs) of one or more resource block sets, the first resource block set belongs to the one or more resource block sets, and the SL C-LBT failure triggered by the first resource block set is not canceled, performing, by the physical layer of the UE, the resource selection or reselection on the third resource pool, wherein the resource in the first resource block set is not contained in the first candidate resource set.

19. The method of any of claims 1-18, wherein selecting or reselecting the resource according to whether the SL C-LBT failure triggered by the first resource block set is cancelled comprises:
detecting that the first resource block set triggers the SL C-LBT failure, and triggering a resource selection or reselection;
determining, by the physical layer of the UE, a second candidate resource set; and
selecting or reselecting, by the MAC layer of the UE, the resource from the second candidate resource set.

20. The method of claim 19, wherein selecting or reselecting, by the MAC layer of the UE, the resource from the second candidate resource set comprises:
in a case where the SL C-LBT failure triggered by the first resource block set is not canceled and the second candidate resource set contains a resource in the first resource block set, not selecting or reselecting the resource in the first resource block set when the MAC layer of the UE selects or reselects the resource from the second candidate resource set.

21. The method of any of claims 1-20, further comprising:
detecting that the first resource block set triggers the SL C-LBT failure, and reselecting a resource pool, wherein the resource pool reselected is one or more of:
a resource pool, wherein each of one or more resource block sets contained in the resource pool has not triggered the SL C-LBT failure;
a resource pool, wherein the resource pool contains one or more resource block sets that have not triggered SL C-LBT failures;
a resource pool, wherein the resource pool contains a part of PRBs of one resource block set that has not triggered the SL C-LBT failure; or
a resource pool, wherein the resource pool contains a part of PRBs of a plurality of resource block sets, one or more resource block sets of the plurality of resource block sets have not triggered SL C-LBT failures.

22. The method of any of claims 1-21, wherein selecting or reselecting the resource according to whether the SL C-LBT failure triggered by the first resource block set is cancelled comprises:
in a case where the SL C-LBT failure triggered by the first resource block set is cancelled, allowing to select or reselect a resource in the first resource block set when performing a resource selection or reselection.

23. The method of any of claims 1-22, wherein the UE is a first UE, and the method further comprises:
sending SL data to a second UE using the resource selected or reselected.

24. A resource selection method, comprising:
receiving sidelink (SL) data sent by a first UE using a selected or reselected resource, wherein the selected or reselected resource is selected or reselected by the first UE according to whether an SL consistent listen-before-talk (C-LBT) failure triggered by a first resource block set is cancelled.

25. A resource selection method, comprising:
selecting or reselecting, by a first UE, a resource according to whether a sidelink (SL) consistent listen-before-talk (C-LBT) failure triggered by a first resource block set is cancelled, and sending SL data to a second UE using the resource selected or reselected; and
receiving, by the second UE, the SL data.

26. A user equipment (UE), comprising:
a processing module, configured to select or reselect a resource according to whether a sidelink (SL) consistent listen-before-talk (C-LBT) failure triggered by a first resource block set is cancelled.

27. A user equipment (UE), comprising:
a transceiver module, configured to receive sidelink (SL) data sent by a first UE using a selected or reselected resource, wherein the selected or reselected resource is selected or reselected by the first UE according to whether an SL consistent listen-before-talk (C-LBT) failure triggered by a first resource block set is cancelled.

28. A user equipment (UE), comprising:
a transceiver, a memory, and one or more processors coupled to the memory;
wherein the memory stores computer-executable instructions, and when the one or more processors execute the computer-executable instructions, the UE is caused to perform the resource selection method according to any one of claims 1-23.

29. A user equipment (UE), comprising:
a transceiver, a memory, and one or more processors coupled to the memory;
wherein the memory stores computer-executable instructions, and when the one or more processors execute the computer-executable instructions, the UE is caused to perform the resource selection method according to claim 24.

30. A communication system, comprising: a first user equipment (UE) and a second UE, wherein the first UE is configured to perform the resource selection method according to any one of claims 1-23, and the second UE is configured to perform the resource selection method according to in claim 24.

31. A storage medium having instructions stored thereon, wherein when the instructions are executed on a communication device, the communication device is caused to perform the resource selection method of any one of claims 1 to 23, or claim 24.
